(19) Europäisches Patentamt / European Patent Office / Office européen des brevets

(11) **EP 3 912 317 B1**

(12) **FASCICULE DE BREVET EUROPEEN**

(45) Date de publication et mention
de la délivrance du brevet:
**01.03.2023 Bulletin 2023/09**

(21) Numéro de dépôt: **20709262.8**

(22) Date de dépôt: **17.01.2020**

(51) Classification Internationale des Brevets (IPC):
***H04L 27/20*** *(2006.01)*

(52) Classification Coopérative des Brevets (CPC):
**H04L 27/2003**

(86) Numéro de dépôt international:
**PCT/FR2020/050064**

(87) Numéro de publication internationale:
**WO 2020/148511 (23.07.2020 Gazette 2020/30)**

(54) **PROCÉDÉ DE RÉCEPTION D'UN SIGNAL SOQPSK-TG EN DÉCOMPOSITION PAM**

VERFAHREN ZUM EMPFANGEN EINES SOQPSK-TG-SIGNALS MIT PAM-ZERLEGUNG

METHOD FOR RECEIVING A SOQPSK-TG SIGNAL WITH PAM DECOMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.01.2019 FR 1900407**

(43) Date de publication de la demande:
**24.11.2021 Bulletin 2021/47**

(73) Titulaire: **Safran Data Systems**
**91978 Courtaboeuf Cedex (FR)**

(72) Inventeur: **SKRZYPCZAK, Alexandre**
**14000 CAEN (FR)**

(74) Mandataire: **Regimbeau**
**20, rue de Chazelles**
**75847 Paris Cedex 17 (FR)**

(56) Documents cités:
- **RICE MICHAEL ET AL: "Space-Time Coding for Aeronautical Telemetry: Part II-Decoder and System Performance", IEEE TRANSACTIONS ON AEROSPACE AND ELECTRONIC SYSTEMS, IEEE SERVICE CENTER, PISCATAWAY, NJ, US, vol. 53, no. 4, 1 août 2017 (2017-08-01), pages 1732-1754, XP011658436, ISSN: 0018-9251, DOI: 10.1109/TAES.2017.2671785 [extrait le 2017-08-07] cité dans la demande**
- **RAMI OTHMAN ET AL: "PAM Decomposition of Ternary CPM With Duobinary Encoding", IEEE TRANSACTIONS ON COMMUNICATIONS., 1 janvier 2017 (2017-01-01), pages 1-1, XP055628136, PISCATAWAY, NJ. USA. ISSN: 0090-6778, DOI: 10.1109/TCOMM.2017.2723567**

**Description**

DOMAINE TECHNIQUE GENERAL

L'invention concerne le domaine des télécommunications numériques sur porteuse unique notamment appliquées au domaine de la télémesure aéronautique. Et l'invention concerne plus particulièrement un procédé de démodulation d'un signal de type OQPSK (en anglais, « *Offset Quadrature Phase Keying* ») présentant un décalage temporel permettant de fournir des sorties souples.

ETAT DE LA TECHNIQUE

A titre liminaire, on se place dans un contexte d'une la communication de données binaires depuis deux antennes émettrices vers une ou plusieurs antennes de réception. Les deux antennes émettrices envoient chacune un signal OQPSK ou issu d'une modulation de type CPM (en anglais « *Continuous Phase Modulation* ») pouvant s'écrire sous forme d'une modulation OQPSK.

Si les deux antennes transmettent le même signal et sont séparées d'une distance supérieure à la longueur d'onde, le diagramme de rayonnement fait apparaître de nombreux lobes, créés par alternance d'une addition constructive (en phase) ou destructive (en opposition de phase) des deux signaux.

Ce phénomène engendre une rupture du lien de télécommunication dans certaines directions et polarisations.

Une solution pour répondre à ce problème, est d'émettre sur chaque antenne des signaux à la même fréquence et au même rythme mais qui interfèrent peu. La technique la plus répandue pour ce faire est le codage spatio-temporel qui consiste à créer deux séquences binaires modulantes conçues de telle façon que les signaux émis depuis les deux antennes ne soient pas en opposition de phase à chaque instant. Cette solution peut être mise en oeuvre par un code en bloc sur chacune des deux voies émettrices.

D'autre part, du fait du mouvement relatif entre les différentes antennes émettrices et réceptrices, le signal reçu est la somme du signal émis depuis une antenne et du signal émis depuis l'autre antenne avec un certain retard temporel. Ce décalage temporel (aussi appelé décalage différentiel) peut alors détruire la qualité de la liaison de télécommunication.

Un cas d'application est la télémesure aéronautique qui utilise des formes d'onde CPM.

De manière classique, dans les applications de télémesure en aéronautique, un aéronef est en communication permanente avec une station de réception en général au sol.

Afin de garantir une liaison de données permanente, deux antennes ou plus sont installées à bord de l'aéronef et séparées pour couvrir une zone de rayonnement différente. Ainsi, les phénomènes précédemment décrits peuvent se produire.

La recommandation IRIG-106, qui décrit la couche physique des systèmes de télémesure ce qui permet de garantir l'interopérabilité entre les applications aéronautiques de télémesure, propose une solution pour lutter contre ce problème.

Cette recommandation préconise ainsi l'utilisation d'un code en bloc particulier, appelé code STC (en anglais « *Space Time Coding* ») lorsque deux antennes émettrices envoient les données par l'intermédiaire d'une modulation SOQPSK-TG (en anglais « *Shaped Offset Quadrature Phase Shift Keying* - Telemetry Group»). Cette technique d'émission des signaux est appelée STC-SOQPSK.

Des solutions de démodulation mettant en oeuvre un codage STC appliqué à la modulation SOQPSK-TG ont été proposées dans les documents :

[A1] : N. T. Nelson, "Space-time coding with offset modulations", Brigham Young University - Provo, 2007;
[A2] : M. Rice, T. Nelson, J. Palmer, C. Lavin and K. Temple, "Space-Time Coding for Aeronautical Telemetry: Part II-Decoder and System Performance," in IEEE Transactions on Aerospace and Electronic Systems, vol. 53, no. 4, pp. 1732-1754, Aug. 2017

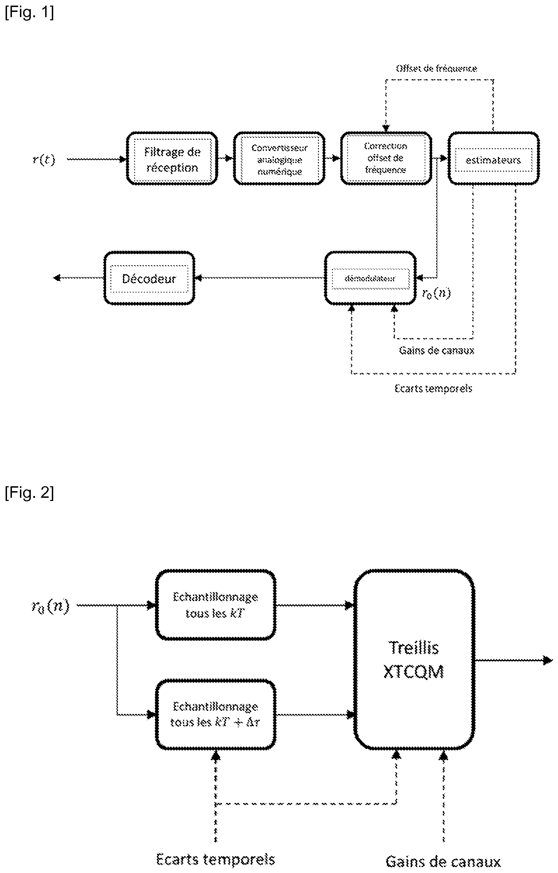

Avant de mettre en oeuvre la technique de démodulation décrite dans ces précédentes références, le signal reçu est traité selon le schéma de réception décrit sur la **figure 1.**

Comme on peut le voir sur cette figure, le signal reçu est dans un premier temps filtré par un filtre de réception. Ce signal filtré est alors numérisé au moyen d'un convertisseur analogique/numérique.

Un traitement d'estimation de paramètres (voir à ce titre le document [A3] : M. Rice, J. Palmer, C. Lavin and T. Nelson, "Space-Time Coding for Aeronautical Telemetry : Part I-Estimators," in IEEE Transactions on Aerospace and Electronic Systems, vol. 53, no. 4, pp. 1709-1731, Aug. 2017) est alors utilisé pour synchroniser le signal en temps et en fréquence, estimer les retards entre les deux signaux reçus et les gains des canaux grâce à des séquences pilotes.

On utilise alors l'estimation de l'offset de fréquence pour corriger l'offset de fréquence présent dans le signal reçu pour obtenir un signal noté $r_0(n)$.

Le signal, noté $r_0(n)$, entre alors dans le démodulateur, dont le principe de fonctionnement sera décrit par la suite. Ce démodulateur permet d'obtenir une séquence binaire.

La séquence binaire ainsi démodulée alimente un décodeur qui, en sortie, rend une séquence d'informations binaires.

Le principe de fonctionnement du démodulateur de l'état de l'art est décrit dans la **figure 2.**

Le signal $r_0(n)$ est d'une part échantillonné au rythme symbole puis, à l'aide du bloc d'estimation permettant d'estimer le décalage temporel, on échantillonne ce même signal $r_0(n)$ au rythme symbole décalé du décalage temporel estimé.

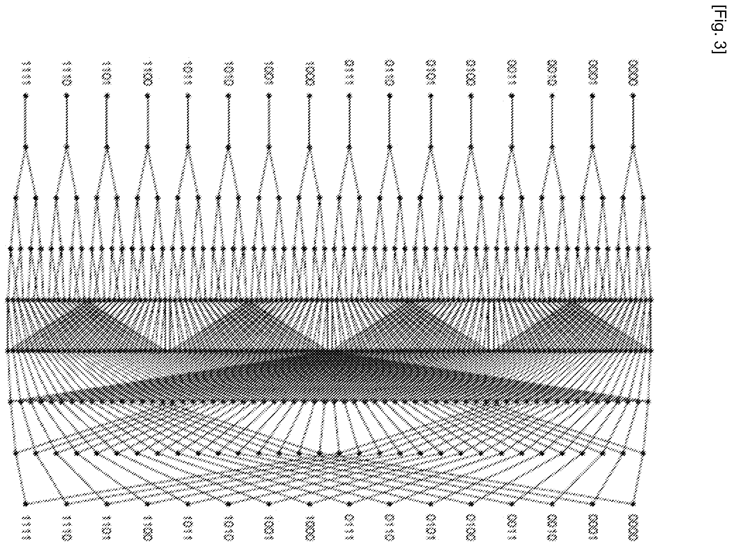

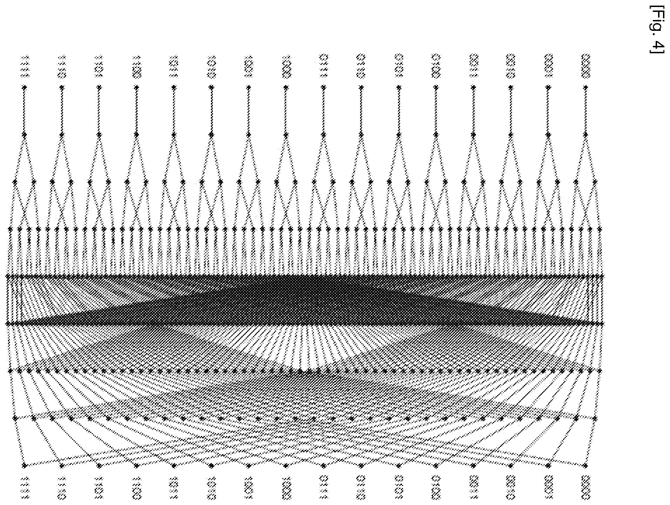

Les deux séquences d'échantillons alimentent alors un démodulateur utilisant un algorithme de Viterbi basé sur un treillis XTCQM XTCQM (en anglais, « *Cross-Correlated Trellis-Coded Quadrature Modulation* ») par exemple à 16 états. La forme du treillis XTCQM est illustrée sur les **figures 3** et **4** respectivement pour le cas d'un décalage temporel positif et pour le cas d'un décalage temporel négatif. Ces treillis XTCQM ont la particularité d'être de taille variable en plus d'être dépendant du signe du décalage temporel.

Ensuite, l'algorithme de Viterbi recherche la séquence binaire la plus probablement émise en utilisant le treillis XTCQM. Pour cela, l'algorithme de Viterbi compare le signal reçu à l'ensemble des signaux qui peuvent être émis suivant le procédé de modulation STC-SOQPSK.

En pratique, cette solution ne peut pas être mise en oeuvre car elle possède une complexité déraisonnable. Ainsi, au lieu de comparer le signal reçu à l'ensemble des signaux qui peuvent être émis suivant le procédé de modulation STC-SOQPSK, on compare le signal reçu à une version approximée des signaux émis par le procédé de modulation STC-SOQPSK.

Cette approximation est obtenue au moyen de la décomposition XTCQM qui est décrite dans le document [A1].

Cette décomposition XTCQM permet d'approximer un signal SOQPSK au moyen de 128 formes d'ondes dont l'allure dépend de la valeur d'un bloc de 7 bits consécutifs.

Ainsi, lors de l'émission de signaux de signaux STC-SOQPSK et en fonction de la valeur du décalage temporel, un nombre différent de bits sont nécessaires pour pouvoir approximer au mieux le signal reçu, ce qui explique donc les treillis différents ainsi que les nombre d'états variables des treillis XTCQM.

Une structure d'implémentation d'un tel récepteur, appelée ici STBC-XTCQM (en anglais « *Space-Time Block Coding - Cross-Correlated Trellis-Coded Quadrature Modulation* » est décrite dans le document [A1].

Cette architecture de démodulation offre des performances acceptables pour des décalages temporels faibles mais présente les inconvénients et les limitations suivantes :

- Une dégradation relativement importante des performances lorsque le décalage temporel entre les deux signaux dépasse un demi-temps symbole.
- Les estimateurs et le démodulateur ne tiennent compte que de l'interférence entre symboles inhérente au procédé de modulation STC-SOQPSK. En présence d'un canal multi-trajets (avec des réflexions), les autres interférences ne sont pas prises en compte, ce qui engendre une dégradation du taux d'erreur binaire.
- Les sous-treillis de l'algorithme présentent un nombre important d'états à savoir 256 et diffèrent selon le sens du décalage temporel entre les deux signaux (avance ou retard) du fait de l'emploi de la représentation XTCQM du signal STC-SOQPSK.
- Les sorties souples c'est-à-dire des symboles pondérés par leur probabilité LLR (en anglais, « *Log-Likelihood Ratio* ») ne sont pas disponibles avec cette architecture de démodulation ce qui ne permet donc pas d'exploiter pleinement les avantages des codes correcteurs d'erreurs à entrées souples tels que les LDPC ou les turbo-codes.

PRESENTATION DE L'INVENTION

L'invention propose de pallier au moins un de ces inconvénients.

A ce titre, l'invention concerne selon un premier aspect un procédé de réception d'un signal CPM avec codage spatio temporel ledit signal étant un signal SOQPSK-TG basé sur la recommandation IRIG-106 émis depuis deux antennes émettrices A1, A2 le signal reçu modulant une pluralité de bits $b_i^{(j)}$ j=0 ou 1 et correspond aux bits émis sur l'antenne A1 et A2 respectivement, ledit signal reçu présentant un décalage temporel $\Delta\tau$ tenant compte du décalage temporel entre les signaux émis depuis chaque antenne A1, A2, ledit signal étant reçu sur une ou plusieurs antennes réceptrices A3 ;

- obtention sur une antenne d'un signal numérique échantillonné $y(k)$ et de sa version décalée $y_{\Delta\tau}(k)$ tenant compte du décalage temporel entre les deux antennes d'émission chacun comprenant les contributions des signaux issus des deux antennes émettrices, lesdits signaux numériques pouvant s'exprimer selon la décomposition suivante

$$s_p(t) \approx \sum_i \rho_{0,2i}^p w_0(t - 2iT_b) - \rho_{1,2i+1}^p w_1(t - 2iT_b - T_b)$$
$$+ \left( \sum_i \rho_{0,2i+1}^p w_0(t - 2iT_b - T_b) - \rho_{1,2i}^p w_1(t - 2iT_b) \right)$$

où :

$T_b$ est la durée d'un bit ;

- $p \in \{0,1\}$
- $\rho_{0,i}^0, \rho_{1,i}^0$ sont des pseudo-symboles correspondant aux bits d'information $b_i^{(0)}$ émis sur l'antenne A1, $\rho_{0,i}^1, \rho_{1,i}^1$ sont des pseudo-symboles correspondant aux bits d'information $b_i^{(1)}$ émis sur l'antenne A2 ;
- $w_0(t)$ et $w_1(t)$ sont des impulsions de mise en forme, respectivement une impulsion principale et une impulsion secondaire ;

- définition d'un algorithme de Viterbi ayant un treillis avec des métriques fixes et des métriques également fonction d'au moins ladite impulsion principale ;
- obtention au moyen dudit algorithme de Viterbi, de LLR sur les bits d'information émis.

L'invention est avantageusement complétée par les caractéristiques suivantes, prises seules ou en une quelconque de leur combinaison techniquement possible :
Les signaux numériques obtenus ont pour expression

$$y(k) \approx \sum_{m=0}^{1} \sum_{i=-\frac{N_t^m-1}{2}}^{\frac{N_t^m-1}{2}} \rho_{m,k-i}^0 \tilde{f}_m^0(i) + \sum_{m=0}^{1} \sum_{i=-\frac{N_t^m-1}{2}}^{\frac{N_t^m-1}{2}} \rho_{m,k-i}^1 \tilde{f}_m^{1,\Delta\tau}(i) + z(kT + \Delta\tau_0)$$

$$y_{\Delta\tau}(k) \approx \sum_{m=0}^{1} \sum_{i=-\frac{N_t^m-1}{2}}^{\frac{N_t^m-1}{2}} \rho_{m,k-i}^0 \tilde{f}_m^{0,\Delta\tau}(i) + \sum_{m=0}^{1} \sum_{i=-\frac{N_t^m-1}{2}}^{\frac{N_t^m-1}{2}} \rho_{m,k-i}^1 \tilde{f}_m^1(i) + z(kT + \Delta\tau_1)$$

où :

- $\Delta\tau = \Delta\tau_1 - \Delta\tau_0$ où $\Delta\tau_0$ est le retard du trajet direct depuis l'antenne A1 et $\Delta\tau_1$ est le retard du trajet direct depuis l'antenne A2, $\Delta\tau$ est le décalage temporel ;
- $\Delta\varepsilon$ est l'entier le plus proche de la division de $\Delta\tau$ par $T$ ;
- $\rho_{0,i}^0, \rho_{1,i}^0$ sont des pseudo-symboles correspondant aux bits d'information émis sur l'antenne A1, $\rho_{0,i}^0, \rho_{1,i}^0$ sont des pseudo-symboles correspondant aux bits d'information émis sur l'antenne A2 ;
- $\delta(t)$ est l'impulsion de Dirac centrée en 0 ;
- $N_t^m$ est la longueur des filtres $\tilde{f}_m^0, \tilde{f}_m^{0,\Delta\tau}, \tilde{f}_m^1, \tilde{f}_m^{1,\Delta\tau}$ ,
- $z$ est un bruit additif.

Les valeurs $\tilde{f}_m^0, \tilde{f}_m^{0,\Delta\tau}, \tilde{f}_m^1, \tilde{f}_m^{1,\Delta\tau}$ sont définies de la manière suivante

$$\tilde{f}_m^p(i) = \tilde{f}_m^p(t = iT)$$

$$\tilde{f}_m^{0,\Delta\tau}(i) = \tilde{f}_m^0(t = iT + \Delta\varepsilon T)$$

$$\tilde{f}_m^{1,\Delta\tau}(i) = \tilde{f}_m^0(t = iT - \Delta\varepsilon T)$$

avec

$$\tilde{f}_m^p(t) = \int f_m^k(\theta)g(\theta - t)d\theta$$

et

$$f_m^0(t) = w_m(t) * \left( h_0\delta(t) + \sum_{i=1}^{N_0} h_{2i}\delta(t - (\Delta\tau_{2i} - \Delta\tau_0)) \right), m \in \{0,1\}$$

$$f_m^1(t) = w_m(t) * \left( h_1\delta(t) + \sum_{i=1}^{N_1} h_{2i+1}\delta(t - (\Delta\tau_{2i+1} - \Delta\tau_1)) \right), m \in \{0,1\}$$

où $N_0$, $N_1$ sont le nombre de trajets multiples respectivement issu de l'antenne A1 et de l'antenne A2.

Le procédé comprend préalablement à l'étape d'obtention des signaux y(k) et de sa version décalée $y_{\Delta\tau}(k)$ d'une étape de filtrage du signal reçu au moyen d'un filtre passe-bas à réponse impulsionnelle finie FIR de type Equiripple construit numériquement de telle façon que la fréquence de coupure normalisée est 0,45.

En l'absence de trajets-multiples, les signaux numériques obtenus sont regroupés par groupes de 4 échantillons, et ont pour expression

$$y(4k) = h_0 \sum_{i=-1}^{1} \rho_{0,4k-i}^0 \widetilde{w}_0(iT) + h_0\rho_{1,4k}^0\widetilde{w}_1(0) + h_1 \sum_{i=-1}^{1} \rho_{0,4k-i}^1 \widetilde{w}_0(iT - \Delta\varepsilon T)$$
$$+ h_1\rho_{1,4k}^1\widetilde{w}_1(-\Delta\varepsilon T) + \tilde{n}(4kT)$$

$$y_{\Delta\tau}(4k) = h_0 \sum_{i=-1}^{1} \rho_{0,4k-i}^0 \widetilde{w}_0(iT + \Delta\varepsilon T) + h_0\rho_{1,4k}^0\widetilde{w}_1(\Delta\varepsilon T) + h_1 \sum_{i=-1}^{1} \rho_{0,4k-i}^1 \widetilde{w}_0(iT)$$
$$+ h_1\rho_{1,4k}^1\widetilde{w}_1(0) + \tilde{n}(4kT + \Delta\varepsilon T)$$

où $\tilde{w}_0$ et $\tilde{w}_1$ sont des versions filtrées d'une impulsion principale $w_0$ et d'une impulsion secondaire $w_1$.

Les métriques de l'algorithme de Viterbi sont définies par

$$\lambda(S_{n-1}(i) \rightarrow S_n(j)) = \sum_{m=-1}^{2} \left[ \left| B_{m,n}^{(0)} \right|^2 + \left| B_{m,n}^{(\Delta\tau)} \right|^2 \right]$$

avec

$$B_{m,n}^{(0)} = y(4n + m) - h_0 \left( \sum_{i=-1}^{1} \rho_{0,4n+m-i}^0 \widetilde{w}_0(iT) + \rho_{1,4n+m}^0 \, \widetilde{w}_1(0) \right)$$

$$- h_1 \left( \sum_{i=-1}^{1} \rho_{0,4n+m-i}^1 \widetilde{w}_0(iT - \Delta\varepsilon T) + \rho_{1,4n+m}^1 \, \widetilde{w}_1(-\Delta\varepsilon T) \right)$$

$$B_{m,n}^{(\Delta\tau)} = y_{\Delta\tau}(4n + m) - h_0 \left( \sum_{i=-1}^{1} \rho_{0,4n+m-i}^0 \widetilde{w}_0(iT + \Delta\varepsilon T) + \rho_{1,4n+m}^0 \, \widetilde{w}_1(\Delta\varepsilon T) \right)$$

$$- h_1 \left( \sum_{i=-1}^{1} \rho_{0,4n+m-i}^1 \widetilde{w}_0(iT) + \rho_{1,4n+m}^1 \, \widetilde{w}_1(0) \right)$$

où $\widetilde{w}_0$ et $\widetilde{w}_1$ sont des versions filtrées d'une impulsion principale $w_0$ et d'une impulsion secondaire $w_1$.

En présence de trajets multiples, le procédé comprend une étape d'estimation du canal de propagation de manière à obtenir les estimés de $\tilde{f}_m^0, \tilde{f}_m^{0,\Delta\tau}, \tilde{f}_m^1, \tilde{f}_m^{1,\Delta\tau}$, l'algorithme de Viterbi utilisant les paramètres estimés du canal, les métriques de l'algorithme de Viterbi étant définies par

$$\lambda(S_{n-1}(i) \to S_n(j)) = \sum_{m=-1}^{2} \left[ \left| B_{m,n}^{(0)} \right|^2 + \left| B_{m,n}^{(\Delta\tau)} \right|^2 \right]$$

avec

$$B_{m,n}^{(0)} = y(4n + m)$$

$$- \left( \sum_{i=-\frac{(N_t-1)}{2}}^{i=\frac{(N_t-1)}{2}} \rho_{0,4n+m-i}^0 \hat{f}_{0,n_p}^0(i) + \sum_{i=-\frac{(N_t-3)}{2}}^{i=\frac{(N_t-3)}{2}} \rho_{1,4n+m-i}^0 \hat{f}_{1,n_p}^0(i) \right.$$

$$\left. + \sum_{i=-\frac{(N_t-1)}{2}}^{i=\frac{(N_t-1)}{2}} \rho_{0,4n+m-i}^1 \hat{f}_{0,n_p}^{1,\Delta\tau}(i) + \sum_{i=-\frac{(N_t-3)}{2}}^{i=\frac{(N_t-3)}{2}} \rho_{1,4n+m-i}^1 \hat{f}_{1,n_p}^{1,\Delta\tau}(i) \right)$$

$$B_{m,n}^{(\Delta\tau)} = y_{\Delta\tau}(4n + m)$$

$$-\left( \sum_{i=-\frac{(N_t-1)}{2}}^{i=\frac{(N_t-1)}{2}} \rho_{0,4n+m-i}^0 \, \hat{f}_{0,n_p}^{0,\,\Delta\tau}(i) + \sum_{i=-\frac{(N_t-3)}{2}}^{i=\frac{(N_t-3)}{2}} \rho_{1,4n+m-i}^0 \, \hat{f}_{1,n_p}^{0,\Delta\tau}(i) \right.$$

$$\left. + \sum_{i=-\frac{(N_t-1)}{2}}^{i=\frac{(N_t-1)}{2}} \rho_{0,4n+m-i}^1 \, \hat{f}_{0,n_p}^1(i) + \sum_{i=-\frac{(N_t-3)}{2}}^{i=\frac{(N_t-3)}{2}} \rho_{1,4n+m-i}^1 \, \hat{f}_{1,n_p}^1(i) \right)$$

En présence de trajets multiples, le procédé comprend une étape d'égalisation, l'algorithme de Viterbi utilisant le signal égalisé, la métrique pour chaque noeud du Viterbi étant définie par

$$\lambda(n) = \begin{cases} \beta_n(2x_n - (D-C)\zeta\beta_{n+3} - C\zeta\beta_{n+1} - D\zeta\beta_{n-3}) - A\chi|\beta_n|^2 & \text{si } n = 4k \\ \beta_n(2x_n - (D-C)\zeta\beta_{n+1} - C\zeta\beta_{n-1} - D\zeta\beta_{n+3}) - A\chi|\beta_n|^2 & \text{si } n = 4k+1 \\ \beta_n(2x_n - (D-C)\zeta\beta_{n-1} - D\zeta\beta_{n+1} - C\zeta\beta_{n-3}) - A\chi|\beta_n|^2 & \text{si } n = 4k+2 \\ \beta_n(2x_n \qquad\qquad - D\zeta\beta_{n-1} - C\zeta\beta_{n+3}) - A\chi|\beta_n|^2 & \text{si } n = 4k+3 \end{cases}$$

avec

$$\chi = |h_0|^2 + |h_1|^2 \ ;$$

$$\zeta = Im(h_0^* h_1)$$

$$A = \frac{1}{2}(\tilde{w}_0(0) + \tilde{w}_0(\Delta\varepsilon T))$$

$$C = \frac{1}{2}(\tilde{w}_0(-T) + \tilde{w}_0(-T + \Delta\varepsilon T))$$

$$D = \frac{1}{2}(\tilde{w}_0(T) + \tilde{w}_0(T + \Delta\varepsilon T))$$

où $\tilde{w}_0$ et $\tilde{w}_1$ sont des versions filtrées d'une impulsion principale $w_0$ et d'une impulsion secondaire $w_1$.

Les pseudo-symboles $\rho_{0,i}^0, \rho_{1,i}^0$ correspondant aux bits d'informations émis sur les antennes A1, A2, ont pour expression

$$\rho_{0,i}^p = \begin{cases} \left(2b_i^{(p)} - 1\right) & \text{si } i \text{ est pair} \\ j\left(2b_i^{(p)} - 1\right) & \text{si } i \text{ est impair} \end{cases}$$

$$\rho^p_{1,i} = \begin{cases} -j\left(2b^{(p)}_{i-2} - 1\right)\left(2b^{(p)}_{i-1} - 1\right)\left(2b^{(p)}_{i} - 1\right) \text{ si } i \text{ est pair} \\ -\left(2b^{(p)}_{i-2} - 1\right)\left(2b^{(p)}_{i-1} - 1\right)\left(2b^{(p)}_{i} - 1\right) \text{ si } i \text{ est impair} \end{cases}$$

Le procédé comprend une étape de décodage des LLRs au moyen d'un décodeur de canal ou l'obtention des bits de poids fort des LLRs.

L'invention concerne également un dispositif de réception comprenant une unité de traitement configurée pour mettre en oeuvre un procédé selon l'invention.

L'invention concerne également un produit programme d'ordinateur comprenant des instructions de codes pour l'exécution d'un procédé selon l'invention, lorsque celui-ci est exécuté par un processeur.

PRESENTATION DES FIGURES

[Fig. 1] [Fig. 2] [Fig. 3] [Fig. 4]
D'autres caractéristiques, buts et avantages de l'invention ressortiront de la description qui suit, qui est purement illustrative et non limitative, et qui doit être lue en regard des dessins annexés sur lesquels, outre les figures 1 à 4 déjà discutées :

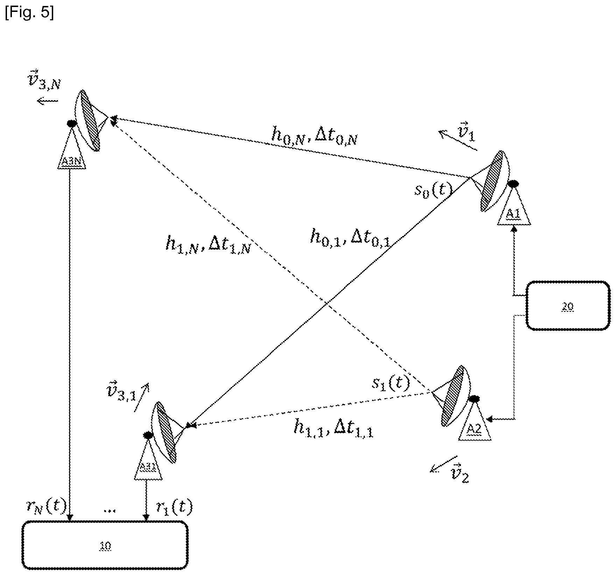

[Fig. 5] la figure 5 illustre un schéma d'émission-réception selon l'invention ;

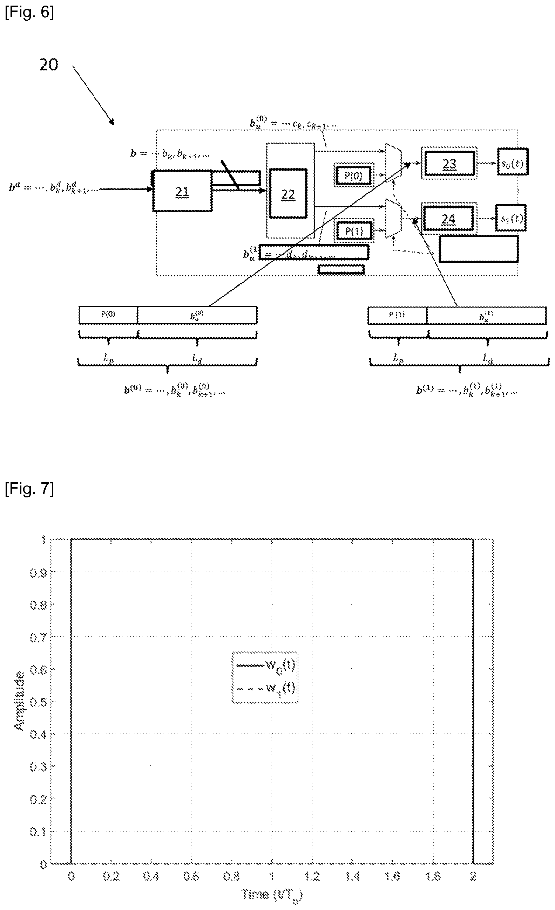

[Fig. 6] la figure 6 illustre un schéma d'émission selon l'invention
[Fig. 7] la figure 7 illustre une impulsion pour la décomposition PAM - OQPSK selon l'invention

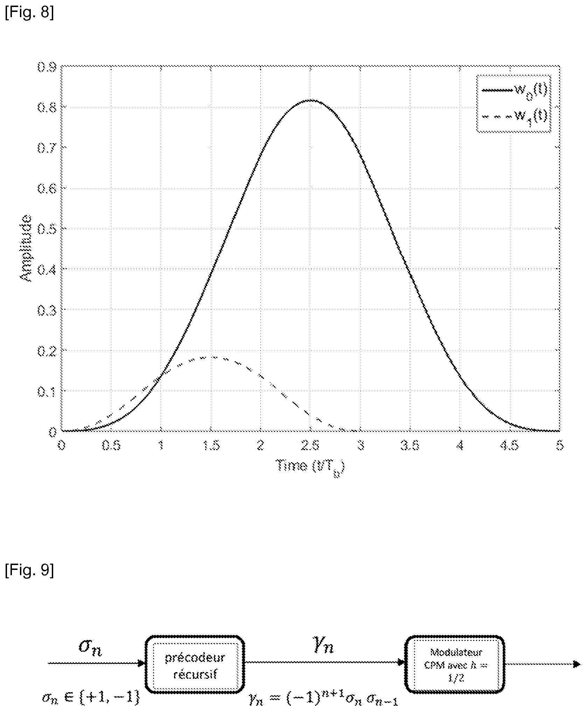

[Fig. 8] la figure 8 illustre une impulsion pour la décomposition PAM-FQPSK-JR selon l'invention
[Fig. 9] la figure 9 illustre un précodeur récursif selon l'invention ;

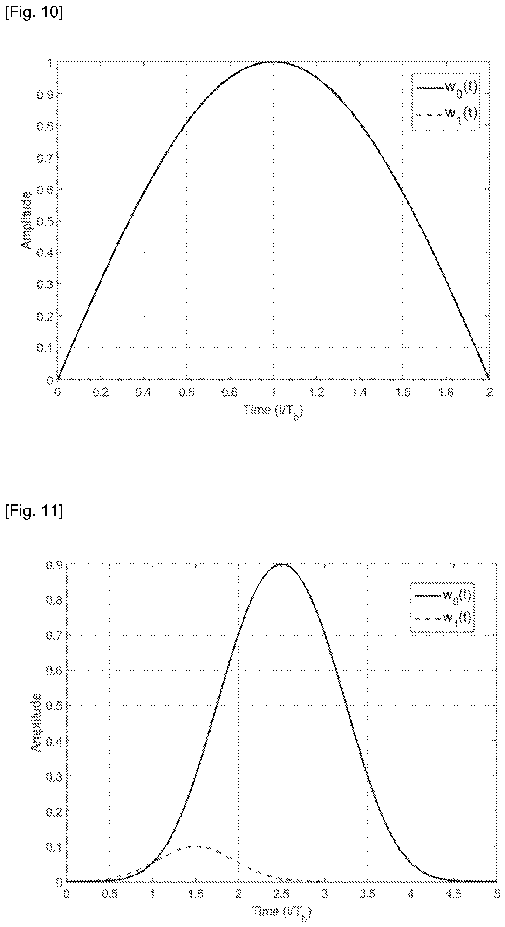

[Fig. 10] la figure 10 illustre une impulsion pour la décomposition PAM-MSK selon l'invention ;
[Fig. 11] la figure 11 illustre une impulsion pour la décomposition PAM-GMSK avec une largeur BT=0,25 selon l'invention ;

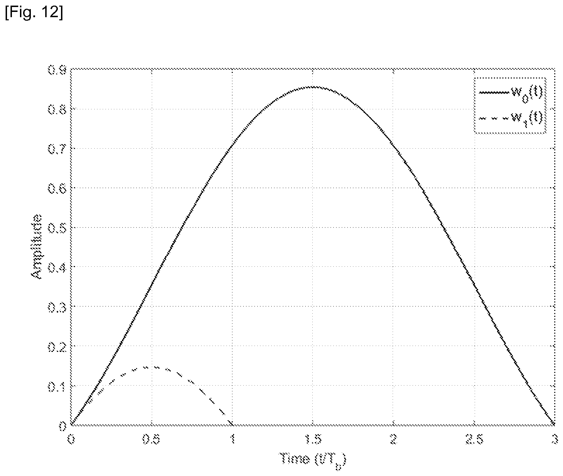

[Fig. 12] la figure 12 illustre une impulsion pour la décomposition PAM-SOQPSK-MIL selon l'invention ;

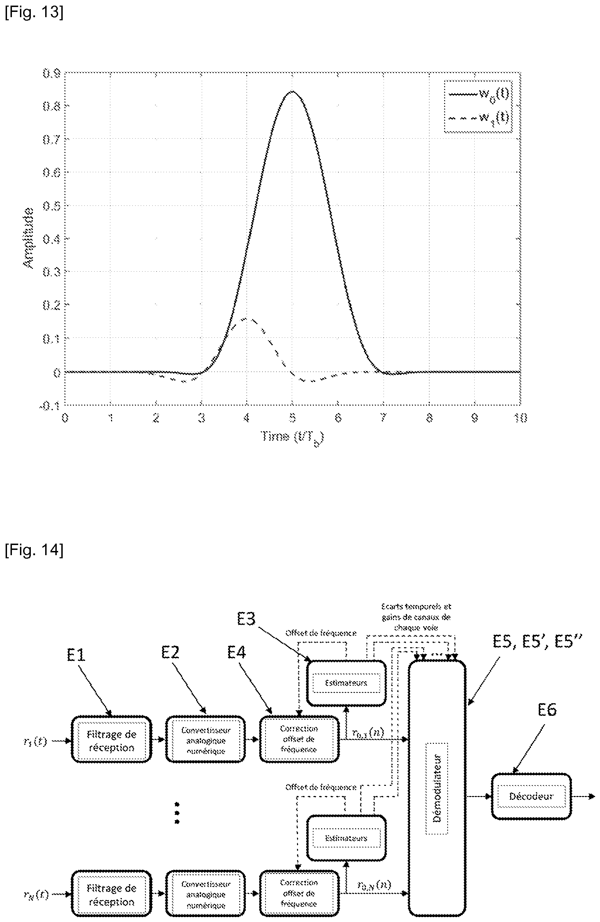

[Fig. 13] la figure 13 illustre une impulsion pour la décomposition PAM-SOQPSK-TG selon l'invention ;
[Fig. 14] la figure 14 illustre un schéma de réception selon l'invention ;

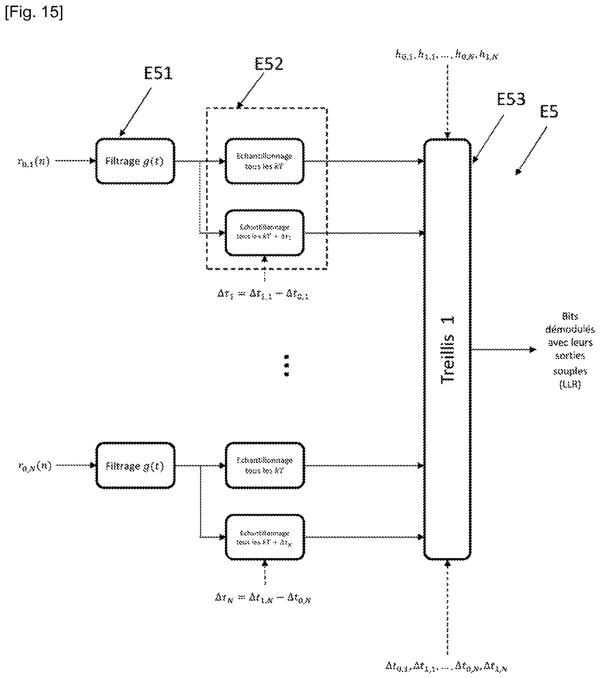

[Fig. 15] la figure 15 illustre un schéma de démodulation selon un premier mode de réalisation de l'invention ;

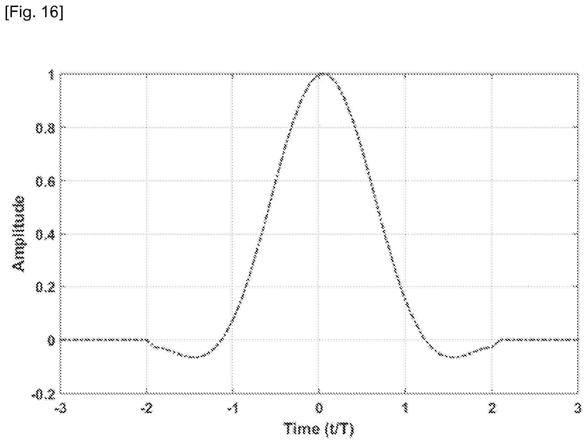

[Fig. 16] la figure 16 illustre un filtre réduisant l'interférence entre symboles utilisé dans le premier mode de réalisation de l'invention ;

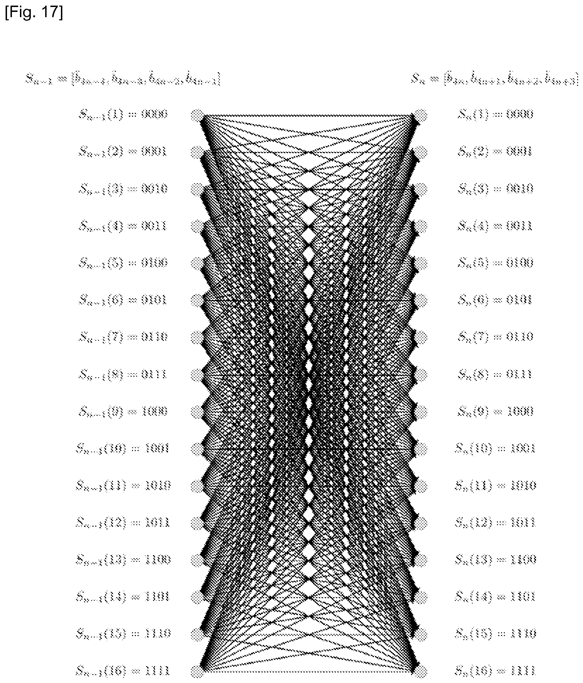

[Fig. 17] la figure 17 illustre un treillis utilisé dans le premier et le deuxième modes de réalisation de l'invention ;

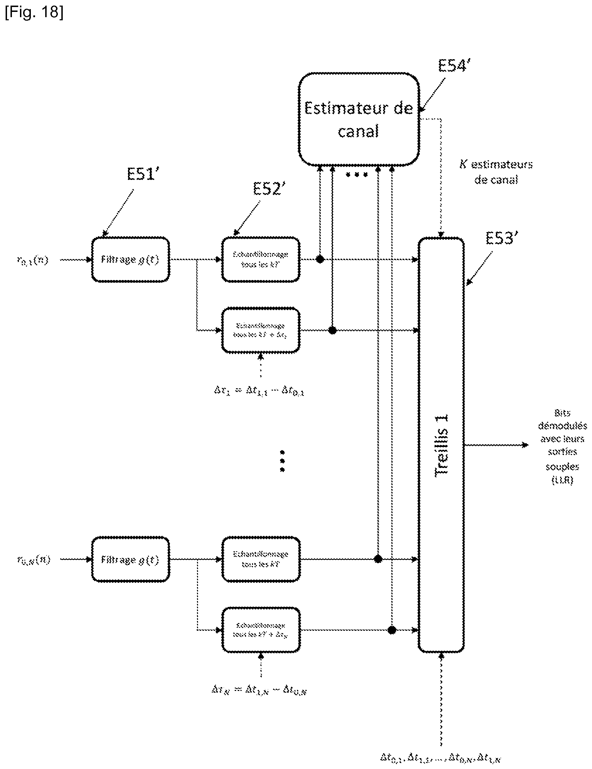

[Fig. 18] la figure 18 illustre un schéma de démodulation selon un deuxième mode de réalisation ;

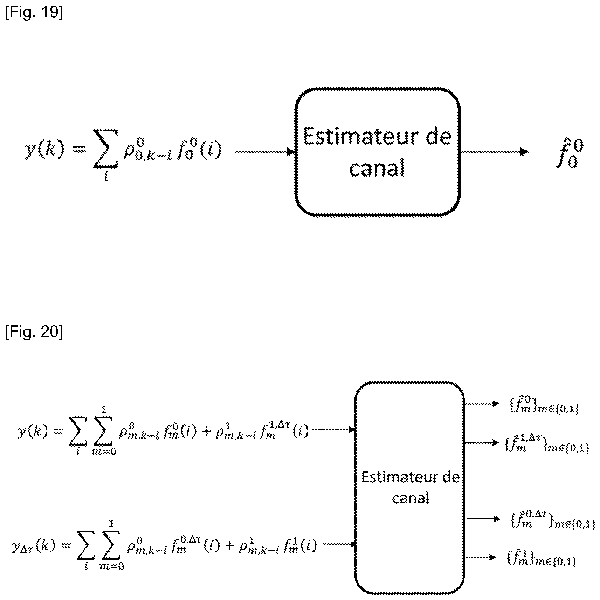

[Fig. 19] la figure 19 illustre un estimateur de canal de type connu ;
[Fig. 20] la figure 20 illustre un estimateur de canal utilisé dans le deuxième de mode de réalisation de l'invention ;

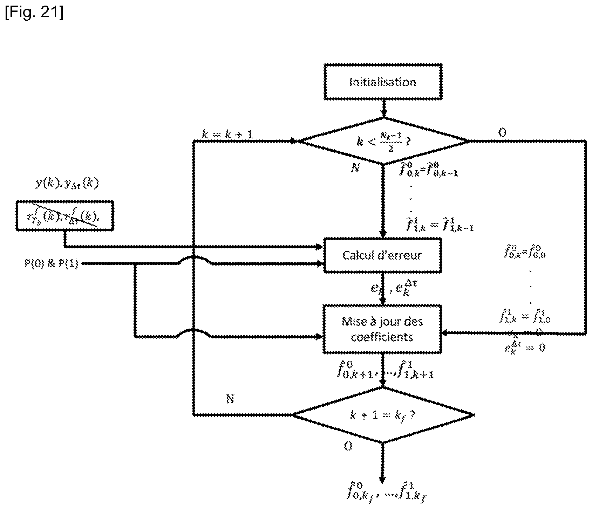

[Fig. 21] la figure 21 illustre le principe de l'estimation de canal ;

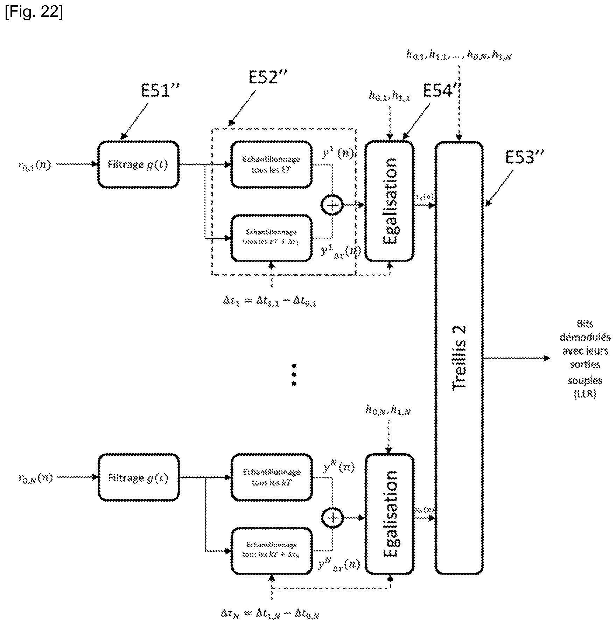

[Fig. 22] la figure 22 illustre schéma de démodulation selon un troisième mode de réalisation de l'invention ;

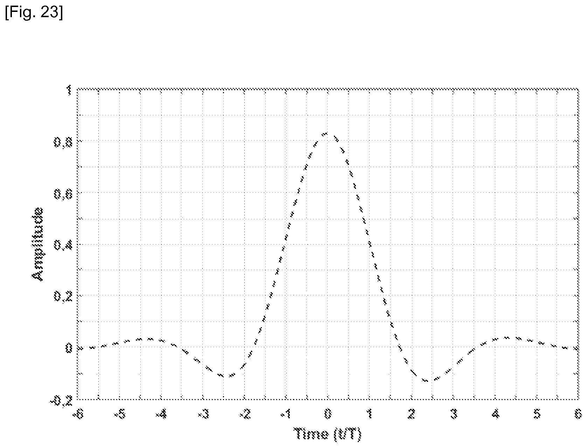

[Fig. 23] la figure 23 illustre un filtre réduisant l'interférence entre symboles utilisé dans le troisième mode de réalisation de l'invention ;

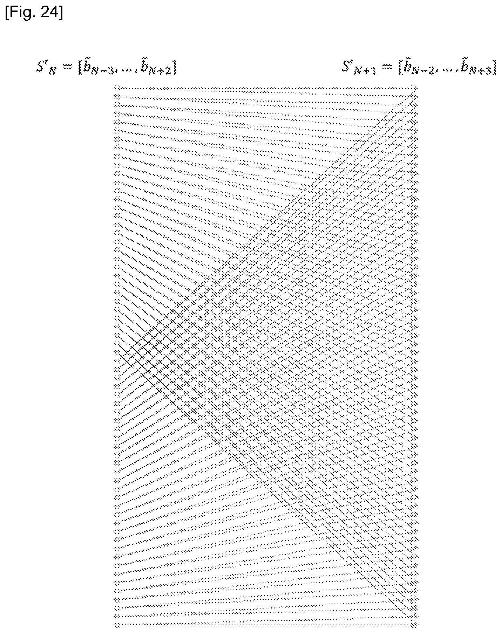

[Fig. 24] la figure 24 illustre un treillis utilisé dans le troisième mode de réalisation de l'invention.

DESCRIPTION DETAILLEE DE L'INVENTION

**1) Description du procédé d'émission**

En relation avec la **figure 5,** deux antennes émettrices A1 et A2, qui peuvent être mobiles selon des vitesses respectives $\vec{v}_1$ et $\vec{v}_2$ envoient respectivement un signal $s_0(t)$ et $s_1(t)$ vers plusieurs antennes réceptrices 3l, l variant de 1 à N, qui peuvent, elles aussi, être mobiles selon une vitesse $\vec{v}_{3l}$.

Les antennes d'émission A1 et A2 sont alimentées par un dispositif d'émission 20 décrit ci-après.

L'antenne de réception A3 reçoit alors un signal qui alimente un dispositif de réception 10 décrit lui aussi ci-après.

La **figure 6** décrit le dispositif d'émission 20 alimentant les antennes émettrices.

Une suite de bits $b^d = \cdots b^d_k, b^d_{k+1} \cdots$ peut avantageusement être encodée par un code correcteur d'erreur (codeur 21 de type LDPC ou Turbo-Code par exemple) afin de rendre le système robuste face au bruit. Une suite de

bits $b = ... b_k, b_{k+1}, ...$ est obtenue à la sortie du codeur 21 ou sans codage canal et est ensuite encodée selon un codage de réarrangement binaire de sorte que deux trains de bits $b_u^{(0)} = \cdots c_k, c_{k+1}, ...$ et $b_u^{(1)} = \cdots d_k, d_{k+1}, ...$ sont obtenus en sortie du codeur 22.

Ce code de réarrangement binaire est une combinaison d'opérations de permutation binaire et d'inversion binaire.

Sur chacun des trains binaires $b_u^{(0)}$ et $b_u^{(1)}$, des bits de préambules notés P(0) et P(1) sont ajoutés. Ainsi sur la séquence $b_u^{(0)}$ (respectivement $b_u^{(1)}$), on insère le préambule P(0) (respectivement P(1)) de taille $L_p$ entre 2 blocs de données de taille $Ld$.

Les trames $b^{(0)}$ et $b^{(1)}$ composées de bits de préambule et de bits correspondant aux données utiles sont représentées en bas de la **figure 6.**

Ces trames ainsi obtenues sont modulées par une modulation de type CPM pouvant s'écrire comme une modulation OQPSK au moyen de deux modulateurs 23, 24, recevant respectivement les trames afin d'obtenir les deux signaux $s_0(t)$ et $s_1(t)$ qui sont émis sur chacune des antennes 1, 2.

Un signal issu d'une modulation de type CPM s'écrit de la façon suivante :

$$s(t) = \sqrt{\frac{E}{T}} \exp\left( j2\pi \sum_i h_i \alpha_i q(t - iT) \right)$$

avec :

- $\alpha_i$ est un symbole d'information issu de l'alphabet {0, $\pm 2$, ..., $\pm(M - 1)$} lorsque M est impair et {$\pm 1$, $\pm 3$, ..., $\pm(M - 1)$} lorsque M est pair.
- E est l'énergie du symbole d'information
- $T$ est la durée du symbole d'information
- $h_i$ est l'indice de modulation
- $q(t) = \int_{-\infty}^{t} g(\tau)d\tau$ est défini comme l'impulsion de phase et $g(t)$ est l'impulsion pulse de fréquence.

Le cas STC-SOQPSK tel que décrit dans la recommandation IRIG-106 est un cas particulier de ce modèle où

- les antennes émettrices 1 et 2 sont mobiles ;
- il n'y a qu'une seule antenne de réception (N=1) ;
- le code correcteur d'erreur est un code LDPC tel que décrit dans la recommandation IRIG-106
- le code de réarrangement binaire construit à partir de la séquence $b = \cdots b_{4k}, b_{4k+1}, b_{4k+2}, b_{4k+3}, ...$ les séquences

  $b_u^{(0)} = \cdots b_{4k}, b_{4k+1}, \bar{b}_{4k+2}, b_{4k+3}, \cdots$ et $b_u^{(1)} = \cdots b_{4k+2}, b_{4k+3}, b_{4k}, \bar{b}_{4k+1}, ...$ où l'opération $\bar{x}$ représente l'opération d'inversion binaire du bit $x$
- les préambules P(0) et P(1) sont tels que décrits dans la recommandation IRIG-106 avec $L_p$ = 128 et $L_d$ = 3200
- M=3
- Les symboles $\alpha_i$ sont tels que décrits dans la recommandation IRIG-106.
- $h_i$ = 1/2
- q(t) et g(t) sont tels que décrits dans la recommandation IRIG-106

## 2) Signaux CPM pouvant s'écrire sous forme de modulation OQPSK

Un signal issu d'une modulation de type CPM pouvant s'écrire comme une modulation OQPSK permet d'écrire de manière exacte ou approximative le signal s(t) précédemment défini comme :

$$s_p(t) \approx \sum_i \rho_{0,2i}^p w_0(t - 2iT_b) - \rho_{1,2i+1}^p w_1(t - 2iT_b - T_b)$$

$$+ \left( \sum_i \rho_{0,2i+1}^p w_0(t - 2iT_b - T_b) - \rho_{1,2i}^p w_1(t - 2iT_b) \right)$$

où :

- $p \in \{0,1\}$
- $\rho_i^0$ et $\rho_i^1$ sont des pseudo-symboles ayant l'expression analytique suivante :

$$\rho_{0,i}^p = \begin{cases} \left(2b_i^{(p)} - 1\right) & \text{si } i \text{ est pair} \\ j\left(2b_i^{(p)} - 1\right) & \text{si } i \text{ est impair} \end{cases}$$

$$\rho_{1,i}^p = \begin{cases} -j\left(2b_{i-2}^{(p)} - 1\right)\left(2b_{i-1}^{(p)} - 1\right)\left(2b_i^{(p)} - 1\right) & \text{si } i \text{ est pair} \\ -\left(2b_{i-2}^{(p)} - 1\right)\left(2b_{i-1}^{(p)} - 1\right)\left(2b_i^{(p)} - 1\right) & \text{si } i \text{ est impair} \end{cases}$$

- $b_i^{(0)}$ et $b_i^{(1)}$ sont respectivement les bits d'information alimentant le modulateur SOQPSK de la voie 1 et de la voie 2.
- $w_0(t)$ et $w_1(t)$ sont des impulsions de mise en forme.

L'obtention de cette expression analytique est décrite en détails dans le document [A4].

[A4]: R. Othman, A. Skrzypczak, Y. Louët, "PAM Décomposition of Ternary CPM with Duobinary Encoding", IEEE Transactions on Communications, vol. 65, no. 10, pp. 4274-4284, Oct. 2017;

La décomposition ci-dessus peut être appliquée à certaines modulations telles que la modulation OQPSK. Dans ce cas de figure, les impulsions $w_0$ et $w_1$ sont représentés sur la **figure 7.**

De même, la modulation FQPSK-JR (en anglais « *Feher's patented Quadrature Phase Shift Keying* »), décrite dans l'IRIG 106, peut aussi s'exprimer sous cette forme avec les impulsions $w_0$ et $w_1$ représentés sur la **figure 8.**

Enfin, toute modulation CPM d'indice h=1/2 contenant un précodeur récursif de la forme décrite dans la **figure 9,** peut être écrite sous cette forme.

En particulier, la modulation MSK (en anglais « Minimum Shift Keying ») entre dans ce cas de figure. Les impulsions $w_0$ et $w_1$ associés sont représentés sur la **figure 10.**

En particulier aussi, la modulation GMSK (en anglais « Gaussian Minimum Shift Keying ») peut aussi s'écrire sous cette forme. Pour le cas particulier de la GMSK avec BT=0,25, les impulsions $w_0$ et $w_1$ associés sont représentés sur la **figure** 11.

En particulier, la modulation SOQPSK-MIL telle que décrite dans l'IRIG 106 entre aussi dans ce cadre. Les impulsions $w_0$ et $w_1$ associés sont représentés sur la **figure 12.**

Enfin, la modulation SOQPSK-TG telle que décrite dans l'IRIG 106 entre dans ce cadre. Les impulsions $w_0$ et $w_1$ associés sont représentés sur la **figure 13.**

**3) Description du procédé de réception**

On modélise maintenant l'expression du signal en entrée du dispositif de réception E2 de la **figure 1.** Ce signal reçu sur l'antenne $l$, notée $r_l(t)$, avec $l$ variant de 1 à $N$, a pour expression analytique :

$$r_l(t) = \left[h_{0,l}s_0\left(t - \Delta t_{0,l}\right) + h_{1,l}s_1\left(t - \Delta t_{1,l}\right)\right]e^{j2\pi\Delta f_l t} + z_l(t)$$

avec

- $h_{0,l}$ le gain complexe associé à la propagation en ligne directe du signal $s_0(t)$ depuis l'antenne émettrice 1 vers l'antenne réceptrice $l$.
- $h_{1,l}$ le gain complexe associé à la propagation en ligne directe du signal $s_1(t)$ depuis l'antenne émettrice 2 vers l'antenne réceptrice *I*.

- $\Delta t_{0,I}$ est le retard dû à la propagation du signal $s_0(t)$ entre l'antenne émettrice 1 et l'antenne réceptrice *I*;
- $\Delta t_{1,I}$ est le retard dû à la propagation du signal $s_1(t)$ entre l'antenne émettrice 2 et l'antenne réceptrice *I*;
- $\Delta f_I$ le décalage (ou offset) de fréquence vu depuis l'antenne réceptrice *I*;
- $z_I(t)$ un bruit additif sur l'antenne *I*.

On nomme par la suite $\Delta\tau_I = \Delta t_{1,I} - \Delta t_{0,I}$ le décalage temporel vu sur l'antenne *I*.

Le dispositif de réception de ce signal est décrit dans la **figure 14**.

Sur chaque voie de réception *I* correspondant à la voie de traitement du signal reçu sur l'antenne *I*, *I* variant de 1 à N, le signal est d'abord filtré (étape E1) par un filtre de réception. Ce signal filtré est ensuite numérisé (étape E2).

Un procédé de synchronisation (étape E3) identique à celui décrit dans le document [A3] est utilisé afin de synchroniser le signal en temps et en fréquence (en estimant $\Delta f_I$) et afin d'estimer les retards $\Delta t_{0,I}$ et $\Delta t_{1,I}$ ainsi que les gains de canaux $h_{0,I}$ et $h_{1,I}$.

On corrige (étape E4) l'offset de fréquence grâce à l'estimation de l'offset de fréquence précédemment réalisée.

On obtient alors N séquences d'échantillons $r_{0,1}(n)$, ..., $r_{0,N}(n)$ qui alimentent le démodulateur. De la même manière, les différentes estimations des retards $\Delta t_{0,I}$ et $\Delta t_{1,I}$ et des gains de canaux $h_{0,I}$ et $h_{1,I}$ interviennent comme paramètres du démodulateur.

En sortie de démodulateur, une séquence de LLR est obtenue. Cette séquence de LLR alimente alors un décodeur.

La présente invention décrite ici consiste en la démodulation (étape E5, E5', E5") du signal par le démodulateur en utilisant l'expression avantageuse du signal STC-SOQPSK basé sur la recommandation IRIG-106 modélisé comme décrit ci-avant. Une telle expression permet de simplifier les traitements du démodulateur.

Selon un premier mode de réalisation (voir partie 4) ci-après), la démodulation (étape E5) s'affranchit des trajets multiples (et ne prend en compte que les deux trajets principaux) de sorte que les *N* séquences d'échantillons $r_{0,1}(n),...,r_{0,N}(n)$ qui alimentent le démodulateur présentent des expressions qui se simplifient. Comme on le verra plus en détail, chaque séquence d'échantillons est d'abord filtrée par un filtre adapté (étape E51) puis le signal est échantillonné (étape E52) en utilisant les paramètres $\Delta t_{0,I}$ et $\Delta t_{1,I}$ estimés aux instants $kT$ et d'autre part aux instants $kT + \Delta t_I$. On obtient alors respectivement les séquences d'échantillons $y_I(k)$, $y_{\Delta\tau_I}(k)$ et $y_{\Delta\tau_I}(k)$ étant la version décalée du décalage temporel du signal $y_I(k)$. Ces signaux ainsi échantillonnés alimentent alors un algorithme de Viterbi (Treillis 1) (étape E53) ayant des métriques de branches spécifiques aux expressions des signaux. On obtient alors en sortie du Treillis 1 une séquence de bits démodulés avec sortie souple de type LLR (en anglais, « Log Likelihood Ratio »). Cette séquence de bits démodulés est alors décodée (étape E6).

Selon un deuxième mode de réalisation (voir partie 5) ci-après), la démodulation (étape E5') considère les trajets multiples en plus des trajets directs, les expressions les N séquences d'échantillons $r_{0,1}(n)$, ...,$r_{0,N}(n)$ qui alimentent le démodulateur sont certes plus complexes que celles du premier mode de réalisation, mais la démodulation est plus performante. Comme pour le premier mode de réalisation, chaque séquence d'échantillons est d'abord filtrée par un filtre adapté (étape E51') puis le signal est échantillonné (étape E52') en utilisant les paramètres $\Delta t_{0,I}$ et $\Delta t_{1,I}$ estimés aux instants $kT$ et d'autre part aux instants $kT + \Delta t_I$. On obtient alors respectivement les séquences d'échantillons $y_I(k)$ et $y_{\Delta\tau_I}(k)$. Ce second mode de réalisation diffère du premier en ce qu'il comprend une étape d'estimation des paramètres des canaux de propagation (étape E54') qui sont utilisés par l'algorithme de Viterbi qui utilise les paramètres des canaux pour estimer les gains $h_{0,1}$, $h_{1,1}$, ...,$h_{0,N}$, $h_{1,N}$ et égaliser les signaux en même temps que la démodulation. Ainsi, les signaux échantillonnés et paramètres des canaux de propagation alimenter un algorithme de Viterbi (Treillis 1) (étape E53') ayant des métriques de branches spécifiques aux expressions des signaux. On obtient alors en sortie du Treillis 1 une séquence de bits démodulés avec sortie souple de type LLR. Cette séquence de bits démodulés est alors décodée (étape E6).

Selon un troisième mode de réalisation (voir partie 6)), la démodulation (étape E5") considère, comme pour le deuxième mode de réalisation, les trajets multiples en plus des trajets directs. La différence entre ce troisième mode de réalisation et le deuxième mode de réalisation est que les signaux sont égalisés avant l'entrée dans l'algorithme de Viterbi (Treillis 2). Ici encore, chaque séquence d'échantillons est d'abord filtrée par un filtre adapté (étape E51") puis le signal est échantillonné (étape E52") en utilisant les paramètres $\Delta t_{0,I}$ et $\Delta t_{1,I}$ estimés aux instants $kT$ et d'autre part aux instants $kT + \Delta t_I$. On obtient alors respectivement les séquences d'échantillons $y_I(k)$ et $y_{\Delta\tau_I}(k)$ Ces signaux échantillonnés sont alors égalisés (étape E54") au moyen des estimations des gains de canaux $h_{0,I}$ et $h_{1,I}$, et les signaux égalisés alimentent alors un algorithme de Viterbi (Treillis 2) (étape E53"). On obtient alors en sortie du Treillis 2 une séquence de bits démodules avec sortie souple de type LLR (en anglais, « Log Likelihood Ratio »). Cette séquence de bits démodulés est alors décodée (étape E6).

On décrit ci-après les différents modes de réalisation présentés.

**4) Premier mode de réalisation, sans trajets multiples**

Cette architecture de démodulation est décrite sur la **figure 15.** Cette architecture possède N entrées correspondant aux N séquences d'échantillons $r_{0,1}(n)$, ...,$r_{0,N}(n)$ qui alimentent le démodulateur. Cette architecture nécessite aussi les estimations des retards $\Delta t_{0,1}, \Delta t_{1,1}, ... , \Delta t_{0,N}, \Delta t_{1,N}$ ainsi que les estimations des gains de canal $h_{0,1}$, $h_{1,1}$, ... , $h_{0,N}$, $h_{1,N}$. En sortie de cette architecture de démodulation, on obtient une séquence de bits démodulés avec sortie souple (LLR).

La séquence d'échantillons $r_{0,l}(n)$ avec $l$ variant de 1 à N est d'abord filtrée par un filtre permettant d'optimiser le rapport signal à bruit en entrée de démodulation. Ce filtre peut être simplement un filtre adapté ou matched filter.

A l'aide des paramètres $\Delta t_{0,l}$ et $\Delta t_{1,l}$, on échantillonne d'une part le signal aux instants $kT$ et d'autre part aux instants $kT + \Delta t_l$. On obtient alors respectivement les séquences d'échantillons $y_l(k)$ et $y_{\Delta Tl}(k)$.

Les deux séquences $y_1(k)$, $y_{\Delta \tau 1}(k)$, ... , $y_N(k)$, $y_{\Delta \tau N}(k)$ alimentent alors un treillis 1. Ce procédé nécessite aussi la connaissance des paramètres $\Delta t_{0,1}$, $\Delta t_{1,1}$, ... , $\Delta t_{0,N}$, $\Delta t_{1,N}$ ainsi que des paramètres $h_{0,1}$, $h_{1,1}$, ..., $h_{0,N}$, $h_{1,N}$.

En notant L le nombre de bits intervenant dans le codage spatio-temporel, le treillis utilisé possède alors $2^L$ états et $2^{2L}$ branches.

L'utilisation de ce treillis permet alors d'estimer la séquence binaire émise la plus probable. D'autre part, l'utilisation d'un treillis unique ayant un nombre d'états fixe permet de calculer des LLR. On parle alors de treillis fixe.

Le calcul des LLR sur les bits d'information peut alors être réalisé par l'intermédiaire d'un algorithme SOVA (en anglais « *Soft Output Viterbi Algorithm* »). La description de cet algorithme est donnée dans le document [A5].

[A5] : J. Hagenauer et P. Hoeher, « A Viterbi Algorithm with Soft-Decision Outputs and its Application », Global Télécommunications Conférence and Exhibition (IEEE GLOBECOM), pp. 1680-1686, vol. 3, Nov. 1989.

Les avantages de cette architecture sont multiples.

1. La présence du filtrage de réduction de l'interférence entre symboles présent à l'entrée du démodulateur permet de réduire fortement la complexité des blocs d'égalisation et de simplifier le treillis utilisé pour l'algorithme de Viterbi.
2. La décomposition particulière du signal CPM sous forme de modulation de type OQPSK a pour conséquence de pouvoir utiliser un treillis fixe.
3. Le treillis unique et fixe utilisé dans l'algorithme de Viterbi a pour avantage d'utiliser un algorithme de type SOVA afin de calculer les LLR sur les bits démodulés.
4. L'ensemble du procédé de démodulation est plus robuste aux fortes valeurs du décalage temporel $\Delta t_{1,l} - \Delta t_{0,N}$ comparativement à la solution de l'état de l'art.
5. Le treillis possède l'avantage de nécessiter des ressources de calcul moins importantes comparativement à la solution de l'état de l'art.
6. Même sans décodeur de canal pour décoder les LLRs, l'utilisattion d'une décision dure (en anglais, « Most Significant Bit », (MSB)) sur les LLRs conduit à une amélioration des performances.

Cette architecture de démodulation exploite le fait que le signal reçu peut être écrit via une approximation très précise des signaux.

Dans le cas particulier du STC-SOQPSK basé sur la recommandation IRIG-106, supposant que l'offset de fréquence ait été parfaitement corrigé, le signal reçu peut être écrit de la manière suivante :

$$r_0(n) \approx h_0 \underbrace{\left[ \sum_i \rho_{0,i}^0 w_0(nT' - iT) + \sum_i \rho_{1,i}^0 w_1(nT' - iT) \right]}_{s_0(nT')}$$

$$+ h_1 \underbrace{\left[ \sum_i \rho_{0,i}^1 w_0(nT' - iT - \Delta\tau) + \sum_i \rho_{1,i}^1 w_1(nT' - iT - \Delta\tau) \right]}_{s_1(nT' - \Delta\tau)}$$

$$+ z(nT')$$

où :

- T' est le temps d'échantillonnage du convertisseur analogique-numérique (en conséquence $T' \ll T$)
- $w_0$ est l'impulsion principale de la décomposition du signal CPM sous forme de modulation OQPSK, présenté **figure 13**

- $w_1$ est l'impulsion secondaire de la décomposition du signal CPM sous forme de modulation OQPSK, présenté **figure 13**
- $h_0$, $h_1$ et $\Delta\tau$ sont respectivement le gain de canal issus de la propagation entre l'antenne émettrice 1 et l'antenne de réception, le gain de canal issus de la propagation entre l'antenne émettrice 2 et l'antenne de réception et le décalage tempore défini comme $\Delta\tau = \Delta t_1 - \Delta t_0$.
- z est un bruit additif
- $\rho_{0,i}^0, \rho_{0,i}^1, \rho_{1,i}^0$ et $\rho_{1,i}^1$ et sont des pseudo-symboles dont l'expression analytique est respectivement :

$$\rho_{0,i}^p = \begin{cases} \left(2b_i^{(p)} - 1\right) \text{ si } i \text{ est pair} \\ j\left(2b_i^{(p)} - 1\right) \text{ si } i \text{ est impair} \end{cases}$$

$$\rho_{1,i}^p = \begin{cases} -j\left(2b_{i-2}^{(p)} - 1\right)\left(2b_{i-1}^{(p)} - 1\right)\left(2b_i^{(p)} - 1\right) \text{ si } i \text{ est pair} \\ -\left(2b_{i-2}^{(p)} - 1\right)\left(2b_{i-1}^{(p)} - 1\right)\left(2b_i^{(p)} - 1\right) \text{ si } i \text{ est impair} \end{cases}$$

- $b_i^{(0)}$ et $b_i^{(1)}$ sont respectivement les bits d'information alimentant le modulateur SOQPSK de la voie 1 et de la voie 2 (voir la figure 6).

On rappelle que $b_i^{(0)}$ et $b_i^{(1)}$ sont liées entre eux par l'intermédiaire du code de réarrangement binaire défini dans la recommandation IRIG-106. Le code de réarrangement binaire construit à partir de la séquence $\boldsymbol{b} = \cdots b_{4k}, b_{4k+1}, b_{4k+2}, b_{4k+3}, \ldots$ les séquences :

$$\boldsymbol{b_u^{(0)}} = \cdots b_{4k}^{(0)}, b_{4k+1}^{(0)}, b_{4k+2}^{(0)}, b_{4k+3}^{(0)}, \ldots = \cdots b_{4k}, b_{4k+1}, \overline{b}_{4k+2}, b_{4k+3}, \ldots$$

$$\boldsymbol{b_u^{(1)}} = \cdots b_{4k}^{(1)}, b_{4k+1}^{(1)}, b_{4k+2}^{(1)}, b_{4k+3}^{(1)}, \ldots = \cdots b_{4k+2}, b_{4k+3}, b_{4k}, \overline{b}_{4k+1}, \ldots$$

où l'opération $\overline{x}$ représente l'opération d'inversion binaire du bit $x$. On a par conséquent L=4.

Les échantillons $r_0(n)$ sont alors filtrés par un filtre permettant de réduire l'interférence entre symboles. En effet, comme $w_0$ et $w_1$ sont des impulsions ayant un support temporel plus grands que T, une interférence entre symboles est présente dans le signal reçu.

Ce filtre doit posséder les caractéristiques suivantes :

- Il ne doit pas colorer la composante de bruit présente dans le signal reçu
- Il doit avoir une bande passante plus large que celle du signal utile.
- Il doit réduire l'interférence entre symboles.

Un filtre adapté ou en anglais, « matched filter » peut être suffisant. Cependant, il a l'inconvénient de colorer le bruit.

Différents filtres satisfaisant les conditions ci-dessus sont possibles. La référence [A6] présente plusieurs filtres pouvant être utilisés dans ce cas de figure.

[A6] Geoghegan, Mark, *"Optimal Linear Detection of SOQPSK,"* in International Telemetering Conférence Proceedings, Oct. 2002

Le filtre g présenté dans la **figure 16** a été déterminé de sorte à satisfaire les conditions ci-dessus.

Le filtre choisi est un filtre passe-bas à réponse impulsionnelle finie FIR (en anglais « Finite Impulse Response ») de type Equiripple construit numériquement de telle façon que la fréquence de coupure normalisée est 0,45.

Ainsi, en sortie de ce filtre et après les opérations d'échantillonnage au rythme symbole, nous avons :

$$y(4k) = h_0 \sum_{i=-1}^{1} \rho_{0,4k-i}^0 \widetilde{w}_0(iT) + h_1 \sum_{i=-1}^{1} \rho_{0,4k-i}^1 \widetilde{w}_0(iT - \Delta\varepsilon T) + \tilde{n}(4kT)$$

$$y_{\Delta\tau}(4k) = h_0 \sum_{i=-1}^{1} \rho_{0,4k-i}^0 \widetilde{w}_0(iT + \Delta\varepsilon T) + h_1 \sum_{i=-1}^{1} \rho_{0,4k-i}^1 \widetilde{w}_0(iT) + \tilde{n}(4kT + \Delta\varepsilon T)$$

où $\widetilde{w}_0$ est le résultat du produit de convolution entre l'impulsion $w_0$ et le filtre $g$, $\tilde{n}$ est le résultat du produit de convolution entre le bruit $z$ et le filtre $g$ et $\Delta\varepsilon$ étant l'entier le plus proche de la division de$\Delta\tau$ par T.

Ainsi, en sortie de ce filtre et après les opérations d'échantillonnage, nous avons :

$$y(4k) = h_0 \sum_{i=-1}^{1} \rho_{0,4k-i}^0 \widetilde{w}_0(iT) + h_0\rho_{1,4k}^0 \widetilde{w}_1(0) + h_1 \sum_{i=-1}^{1} \rho_{0,4k-i}^1 \widetilde{w}_0(iT - \Delta\varepsilon T)$$
$$+ h_1\rho_{1,4k}^1 \widetilde{w}_1(-\Delta\varepsilon T) + \tilde{n}(4kT)$$

$$y_{\Delta\tau}(4k) = h_0 \sum_{i=-1}^{1} \rho_{0,4k-i}^0 \widetilde{w}_0(iT + \Delta\varepsilon T) + h_0\rho_{1,4k}^0 \widetilde{w}_1(\Delta\varepsilon T) + h_1 \sum_{i=-1}^{1} \rho_{0,4k-i}^1 \widetilde{w}_0(iT)$$
$$+ h_1\rho_{1,4k}^1 \widetilde{w}_1(0) + \tilde{n}(4kT + \Delta\varepsilon T)$$

Ces deux séquences d'échantillons alimentent alors un treillis qui a pour but de trouver une séquence binaire permettant de maximiser ou de minimiser une fonction de coût donnée.

Dans ce cas de figure, ce treillis cherche à minimiser l'erreur quadratique moyenne entre le signal reçu et le signal reconstruit par approximation.

En d'autres termes, on utilise un algorithme de Viterbi cherchant à trouver la meilleure séquence de bits $\hat{\underline{S}}$ permettant de résoudre le problème suivant :

$$\hat{\underline{S}} = \operatorname*{argmin}_{S} \Lambda(\underline{S})$$

avec :

$$\Lambda(\underline{S}) = \sum_{n=0}^{(N-1)/4} \left( \sum_{m=-1}^{2} \left[ \left| B_{m,n}^{(0)} \right|^2 + \left| B_{m,n}^{(\Delta\tau)} \right|^2 \right] \right)$$

En notant :

$$B_{m,n}^{(0)} = y(4n+m) - h_0 \left( \sum_{i=-1}^{1} \rho_{0,4n+m-i}^0 \widetilde{w}_0(iT) + \rho_{1,4n+m}^0 \widetilde{w}_1(0) \right)$$
$$- h_1 \left( \sum_{i=-1}^{1} \rho_{0,4n+m-i}^1 \widetilde{w}_0(iT - \Delta\varepsilon T) + \rho_{1,4n+m}^1 \widetilde{w}_1(-\Delta\varepsilon T) \right)$$

$$B_{m,n}^{(\Delta\tau)} = y_{\Delta\tau}(4n + m) - h_0 \left( \sum_{i=-1}^{1} \rho_{0,4n+m-i}^0 \widetilde{w}_0(iT + \Delta\varepsilon T) + \rho_{1,4n+m}^0 \, \widetilde{w}_1(\Delta\varepsilon T) \right)$$

$$- h_1 \left( \sum_{i=-1}^{1} \rho_{0,4n+m-i}^1 \widetilde{w}_0(iT) + \rho_{1,4n+m}^1 \, \widetilde{w}_1(0) \right)$$

On récupère donc les bits d'information en employant un algorithme de Viterbi associé au treillis illustré sur la **figure 17.**

Le treillis considéré décrit les transitions d'un état $S_n = [b_{4n} \; b_{4n+1} \; b_{4n+2} \; b_{4n+3}]$ vers un état $S_{n+1} = [b_{4n+4} \; b_{4n+5} \; b_{4n+6} \; b_{4n+7}]$. Les transitions sont pondérées via la métrique de branche suivante :

$$\lambda(S_{n-1}(i) \rightarrow S_n(j)) = \sum_{m=-1}^{2} \left[ \left| B_{m,n}^{(0)} \right|^2 + \left| B_{m,n}^{(\Delta\tau)} \right|^2 \right]$$

Le treillis comporte donc 16 états, décrivant les 16 états possibles de la variable $S_n$. Le nombre de branches à calculer est alors de 256.

L'utilisation du treillis associé à cette architecture permet donc, à l'aide des métriques de branche définies ci-dessus, d'utiliser un algorithme de type SOVA afin de calculer les LLR sur les bits d'information.

On obtient des sorties souples sous forme de LLR et/ou des sorties dures en faisant les opérations qui suivent.

On calcule dans un premier temps les métriques cumulées $\Gamma_n(S_n(j))$ des noeuds $S_n(j)$ à l'époque n :

$$\Gamma_n\big(S_n(j)\big) = min_i\big[\gamma_n\big(S_{n-1}(i), S_n(j)\big)\big], (i,j)\epsilon\{1, \dots, 16\}^2$$

avec

$$\gamma_n\big(S_{n-1}(i), S_n(j)\big) = \Gamma_{n-1}\big(S_{n-1}(i)\big) + \lambda\big(S_{n-1}(i) \rightarrow S_n(j)\big)$$

On calcule la différence de vraisemblance :

$$R_n\big(S_{n-1}(i), S_n(j)\big) = \Gamma_n\big(S_n(j)\big) - \gamma_n\big(S_{n-1}(i), S_n(j)\big), \quad (i,j)\,\epsilon(\{1, \dots, 16\})^2$$

Ensuite on calcule le maximum du logarithme de la probabilité conjointe :

$$P\big(S_{n-1}(i), S_n(j), r^f\big) = \beta_n\big(S_n(i)\big) + R_n\big(S_{n-1}(i), S_n(j)\big)$$

avec

$$\beta_{n-1}\big(S_{n-1}(j)\big) = min_i\big[R_n\big(S_{n-1}(i), S_n(j)\big) + \beta_n\big(S_n(i)\big)\big]$$

Les sorties souples (ou LLR) du symbole $\hat{S}_n$, estimée du symbole $S_n$, sont :

$$LLR\big(\hat{S}_n\big) = P\big(\hat{S}_n = S_n(j)\backslash r^f\big)$$

avec

$$P\big(\hat{S}_n = S_n(j)\backslash r^f\big) = min_i\big[P(S_{n-1}(i), S_n(j), r^f\big]$$

La conversion des LLRs symbole $\hat{S}_n$ aux LLRs bits ($\hat{b}_{4n}$, $\hat{b}_{4n+1}$, $\hat{b}_{4n+2}$, $\hat{b}_{4n+3}$) se fait de la manière suivante :

$$LLR(\hat{b}_{4n}) = \min\left(LLR(\hat{S}_n = [0, \tilde{b}_{4n+1}, \tilde{b}_{4n+2}, \tilde{b}_{4n+3}])\right)$$
$$- \min\left(LLR(\hat{S}_n = [1, \tilde{b}_{4n+1}, \tilde{b}_{4n+2}, \tilde{b}_{4n+3}])\right)$$

$$LLR(\hat{b}_{4n+1}) = \min\left(LLR(\hat{S}_n = [\tilde{b}_{4n}, 0, \tilde{b}_{4n+2}, \tilde{b}_{4n+3}])\right)$$
$$- \min\left(LLR(\hat{S}_n = [\tilde{b}_{4n}, 1, \tilde{b}_{4n+2}, \tilde{b}_{4n+3}])\right)$$

$$LLR(\hat{b}_{4n+2}) = \min\left(LLR(\hat{S}_n = [\tilde{b}_{4n}, \tilde{b}_{4n+1}, 0, \tilde{b}_{4n+3}])\right)$$
$$- \min\left(LLR(\hat{S}_n = [\tilde{b}_{4n}, \tilde{b}_{4n+1}, 1, \tilde{b}_{4n+3}])\right)$$

$$LLR(\hat{b}_{4n+3}) = \min\left(LLR(\hat{S}_n = [\tilde{b}_{4n}, \tilde{b}_{4n+1}, \tilde{b}_{4n+2}, 0])\right)$$
$$- \min\left(LLR(\hat{S}_n = [\tilde{b}_{4n}, \tilde{b}_{4n+1}, \tilde{b}_{4n+2}, 1])\right)$$

Les sorties dures sont ainsi obtenues par :

$$\hat{b}_{4n} = sign\left(LLR(\hat{b}_{4n})\right)$$

$$\hat{b}_{4n+1} = sign\left(LLR(\hat{b}_{4n+1})\right)$$

$$\hat{b}_{4n+2} = sign\left(LLR(\hat{b}_{4n+2})\right)$$

$$\hat{b}_{4n+3} = sign\left(LLR(\hat{b}_{4n+3})\right)$$

Avec sign(x) une fonction qui renvoi 1 si 1, *si* $x \geq 0$, -1 *si* $x < 0$. La séquence binaire estimée des données est donc

$$\hat{b}_n^d = \frac{1}{2}(\hat{b}_n + 1)$$

Les LLRs bits sont ensuite fournis au décodeur correcteur d'erreur (de type LDPC par exemple) afin de corriger davantage les erreurs générées par la présence du bruit. Le décodeur peut fonctionner avec les deux sorties (sorties dures ou souples). Cependant, il est plus avantageux d'utiliser les LLRs bits puisque ces informations sont davantage exploitées par le décodeur pour améliorer les performances globales du système.

**5) Deuxième mode de réalisation : prise en compte des trajets multiples et estimation de canal en remplacement des estimées des gains de canaux du premier mode de réalisation**

L'architecture proposée ici permet de répondre à un problème plus général. En effet, on se place dans le cas où le signal reçu sur l'antenne *l* noté $r_l(t)$ est composé de deux trajets principaux et des trajets multiples. Les trajets multiples sont issus de réflexions du signal émis soit sur le sol soit dans l'atmosphère.
Le signal reçu r(t) s'exprime dans ce cas de la manière suivante :

$$r_l(t) = \left[\sum_{i=0}^{N_{0,l}} h_{2i,l}s_0\left(t - \Delta\tau_{2i,l}\right) + \sum_{j=0}^{N_{1,l}} h_{2j+1}s_1\left(t - \Delta\tau_{2j+1,l}\right)\right] e^{j2\pi\Delta f_l t} + z_l(t)$$

avec

- $N_{0,l}$, $N_{1,l}$ le nombre de trajets associés respectivement aux signaux $s_0(t)$, $s_1(t)$ considérant l'antenne de réception $l$.
- $\{h_{2i,l}\}_{i\in\{0,N_0\}}$ les gains associés aux canaux de propagation du trajet en ligne direct associé au signal $s_0(t)$ sur l'antenne de réception $l$. Le gain du canal associé au trajet principal est $h_{0,l}$
- $\{h_{2j+1,l}\}_{j\in\{0,N_1\}}$ les gains associés aux canaux de propagation du trajet en ligne direct associé au signal $s_1(t)$ sur l'antenne de réception $l$. Le gain du canal associé au trajet principal est $h_{1,l}$
- $\{\Delta\tau_{2i,l}\}_{j\in\{0,N_0\}}$, $\{\Delta\tau_{2j+1,l}\}_{j\in\{0,N_1\}}$ les retards associés à ces trajets sur l'antenne de réception $l$;
- $\Delta f_l$ le décalage (ou offset) de fréquence ;
- $z_l(t)$ un bruit additif.

On rappelle de plus que :

$$s_0(t) = \sum_i \rho_{0,i}^0 w_0(t - iT) + \sum_i \rho_{1,i}^0 w_1(t - iT)$$

$$s_1(t) = \sum_i \rho_{0,i}^1 w_0(t - iT) + \sum_i \rho_{1,i}^1 w_1(t - iT)$$

Cette architecture, décrite sur la **figure 18,** possède alors l'avantage de pouvoir estimer les différents paramètres des canaux de propagation et d'injecter ces estimations lors de la démodulation.

Une différence notable par rapport à l'architecture du premier mode de réalisation réside dans le fait qu'il n'est pas nécessaire d'alimenter le démodulateur avec les estimations des gains de canal $h_{0,1}$, $h_{1,1}$, ..., $h_{0,N}$, $h_{1,N}$ dans la mesure où cette étape est faite dans le démodulateur.

Cette architecture possède $N$ entrées correspondant aux $N$ séquences d'échantillons $r_{0,1}(n)$, ...,$r_{0,N}(n)$ qui alimentent le démodulateur. Cette architecture nécessite aussi les estimations des retards $\Delta t_{0,1}$, $\Delta t_{1,1}$, ... , $\Delta t_{0,N}$, $\Delta t_{1,N}$. En sortie de cette architecture de démodulation, on obtient une séquence de bits démodulés avec sortie souple (LLR).

La séquence d'échantillons $r_{0,l}(n)$ avec $l$ variant de 1 à N est d'abord filtrée par un filtre permettant d'optimiser le rapport signal à bruit en entrée de démodulation. Ce filtre peut être simplement un filtre adapté ou matched filter.

A l'aide des paramètres $\Delta t_{0,l}$ et $\Delta t_{1,1}$, on échantillonne d'une part le signal $r_{0,l}(n)$ aux instants $kT$ et d'autre part aux instants $kT + \Delta t_l$. On obtient alors respectivement les séquences d'échantillons $y_l(k)$ et $y_{\Delta\tau l}(k)$.

Les séquences $y_1(k)$, $y_{\Delta\tau 1}(k)$,... , $y_N(k)$, $y\Delta_{\tau N}(k)$ alimentent alors un procédé d'estimation de canal.

Ce procédé a pour but de fournir K estimation de canal au treillis 1.

En notant L le nombre de bits intervenant dans le codage spatio-temporel, le treillis utilisé possède alors $2^{mL}$ états et $2^{2mL}$ branches où m est un paramètre variable dépendant de la réponse impulsionnelle du canal de propagation.

Les séquences $y_1(k)$, $y_{\Delta\tau 1}(k)$,... , $y_N(k)$, $y\Delta_{\tau N}(k)$, couplées au K estimations de canal issues du procédé d'estimation de canal, alimentent le treillis 1. Ce procédé nécessite aussi la connaissance des paramètres $\Delta t_{0,1}$, $\Delta t_{1,1}$, ... , $\Delta t_{0,N}$, $\Delta t_{1,N}$.

L'utilisation de ce treillis permet alors d'estimer la séquence binaire émise la plus probable. D'autre part, l'utilisation d'un treillis unique ayant un nombre d'états fixe permet de calculer des LLR.

Le calcul des LLR sur les bits d'information peut alors être réalisé par l'intermédiaire d'un algorithme SOVA (en anglais « *Soft Output Viterbi Algorithm* »). La description de cet algorithme est donnée dans le document [A3].

Les avantages de cette architecture sont multiples.

1. La présence du filtrage de réduction de l'interférence entre symboles présent à l'entrée du démodulateur permet de réduire fortement la complexité des blocs d'égalisation et de simplifier le treillis utilisé pour l'algorithme de Viterbi.
2. La décomposition particulière du signal CPM sous forme de modulation de type OQPSK a pour conséquence de pouvoir utiliser un treillis fixe.
3. L'estimateur de canal permet d'estimer des canaux multi-trajet.
4. Les estimations de canal fournies au treillis de démodulation permettent alors d'égaliser le signal reçu.
5. Le treillis unique et fixe utilisé dans l'algorithme de Viterbi a pour avantage d'utiliser un algorithme de type SOVA afin de calculer les LLR sur les bits démodulés.

6. L'ensemble du procédé de démodulation est plus robuste aux effets des canaux multi-trajets comparativement à la solution de l'état de l'art.

7. Même sans décodeur de canal pour décoder les LLRs, l'utilisation d'une décision dure (en anglais, hard décision par extraction du « Most Significant Bit », (MSB)) sur les LLRs conduit à une amélioration des performances.

Dans le cas particulier du STC-SOQPSK basé sur la recommandation IRIG-106, supposant que l'offset de fréquence ait été parfaitement corrigé, le signal reçu peut être écrit de la manière suivante après les étapes de filtrage par $g$ et d'échantillonnage :

$$y(k) \approx \sum_{m=0}^{1} \sum_{i=-\frac{N_t^m-1}{2}}^{\frac{N_t^m-1}{2}} \rho_{m,k-i}^0 \tilde{f}_m^0(i) + \sum_{m=0}^{1} \sum_{i=-\frac{N_t^m-1}{2}}^{\frac{N_t^m-1}{2}} \rho_{m,k-i}^1 \tilde{f}_m^{1,\Delta\tau}(i) + z(kT + \Delta\tau_0)$$

$$y_{\Delta\tau}(k) \approx \sum_{m=0}^{1} \sum_{i=-\frac{N_t^m-1}{2}}^{\frac{N_t^m-1}{2}} \rho_{m,k-i}^0 \tilde{f}_m^{0,\Delta\tau}(i) + \sum_{m=0}^{1} \sum_{i=-\frac{N_t^m-1}{2}}^{\frac{N_t^m-1}{2}} \rho_{m,k-i}^1 \tilde{f}_m^1(i) + z(kT + \Delta\tau_1)$$

où :

- $\Delta\tau = \Delta\tau_1 - \Delta\tau_0$ où $\Delta\tau_0$ est le retard du trajet direct depuis l'antenne 1 et $\Delta\tau_1$ est le retard du trajet direct depuis l'antenne 2. $\Delta\tau$ est le décalage temporel.
- $\Delta\varepsilon$ est l'entier le plus proche de la division de $\Delta\tau$ par T.
- Les valeurs $\tilde{f}_m^p(i)$ et $\tilde{f}_m^{p,\Delta\tau}(i)$ sont définis de la manière suivante :

$$\tilde{f}_m^p(i) = \tilde{f}_m^p(t = iT)$$

$$\tilde{f}_m^{0,\Delta\tau}(i) = \tilde{f}_m^0(t = iT + \Delta\varepsilon T)$$

$$\tilde{f}_m^{1,\Delta\tau}(i) = \tilde{f}_m^0(t = iT - \Delta\varepsilon T)$$

avec

$$\tilde{f}_m^p(t) = \int f_m^k(\theta) g(\theta - t) d\theta$$

et

$$f_m^0(t) = w_m(t) * \left( h_0 \delta(t) + \sum_{i=1}^{N_0} h_{2i} \delta(t - (\Delta\tau_{2i} - \Delta\tau_0)) \right), m \in \{0,1\}$$

$$f_m^1(t) = w_m(t) * \left( h_1 \delta(t) + \sum_{i=1}^{N_1} h_{2i+1} \delta(t - (\Delta\tau_{2i+1} - \Delta\tau_1)) \right), m \in \{0,1\}$$

- $\delta(t)$ est l'impulsion de Dirac centrée en 0.
- $N_t^m$ est la longueur des filtres $\tilde{f}_m^0, \tilde{f}_m^{0,\Delta\tau}, \tilde{f}_m^1, \tilde{f}_m^{1,\Delta\tau}$
- z est un bruit additif
- $\rho_{0,i}^0, \rho_{0,i}^1, \rho_{1,i}^0, \rho_{1,i}^1$ sont des pseudo-symboles dont l'expression analytique est respectivement :

$$\rho_{0,i}^p = \begin{cases} \left(2b_i^{(p)} - 1\right) & \text{si } i \text{ est pair} \\ j\left(2b_i^{(p)} - 1\right) & \text{si } i \text{ est impair} \end{cases}$$

$$\rho_{1,i}^p = \begin{cases} -j\left(2b_{i-2}^{(p)} - 1\right)\left(2b_{i-1}^{(p)} - 1\right)\left(2b_i^{(p)} - 1\right) & \text{si } i \text{ est pair} \\ -\left(2b_{i-2}^{(p)} - 1\right)\left(2b_{i-1}^{(p)} - 1\right)\left(2b_i^{(p)} - 1\right) & \text{si } i \text{ est impair} \end{cases}$$

- $b_i^{(0)}$ et $b_i^{(1)}$ sont respectivement les bits d'information alimentant le modulateur SOQPSK de la voie 1 et de la voie 2, chaque voie correspondant aux antennes A1, A2.

On rappelle que $b_i^{(0)}$ et $b_i^{(1)}$ sont liées entre eux par l'intermédiaire du code de réarrangement binaire défini dans la recommandation IRIG-106. Le code de réarrangement binaire construit à partir de la séquence $\boldsymbol{b} = \cdots b_{4k}, b_{4k+1}, b_{4k+2}, b_{4k+3}, \ldots$ les séquences :

$$\boldsymbol{b_u^{(0)}} = \cdots b_{4k}^{(0)}, b_{4k+1}^{(0)}, b_{4k+2}^{(0)}, b_{4k+3}^{(0)}, \ldots = \cdots b_{4k}, b_{4k+1}, \overline{b}_{4k+2}, b_{4k+3}, \ldots$$

$$\boldsymbol{b_u^{(1)}} = \cdots b_{4k}^{(1)}, b_{4k+1}^{(1)}, b_{4k+2}^{(1)}, b_{4k+3}^{(1)}, \ldots = \cdots b_{4k+2}, b_{4k+3}, b_{4k}, \overline{b}_{4k+1}, \ldots$$

où l'opération $\overline{x}$ représente l'opération d'inversion binaire du bit $x$.

Les opérations de filtrage permettant de réduire l'interférence entre symboles et les opérations d'échantillonnage sont les mêmes que celles décrites dans l'architecture 1.

L'opération d'estimation de canal qui prend en entrée le signal ainsi échantillonné peut être réalisée par l'intermédiaire du procédé utilisé dans la littérature (voir pour cela le document [A3])

Cependant, en présence de canaux multitrajets, ce procédé de référence n'est plus adapté.

Dans la littérature, les procédés d'estimation de canal ont des architectures telles que décrites sur la **figure 19.** En entrée de cet estimateur, on injecte une séquence de la forme

$$y(k) = \sum_i \rho_{0,k-i}^0 f_0^0(i)$$

et cet estimateur nous fournit une estimée $\hat{f}_0^0$.

Un exemple d'un tel procédé, ainsi que de nombreuses techniques dérivées, est décrit dans [A7].

[A7] B. Farhang-Boroujeny, Adaptive Filters, Wiley, 1998.

Or cette structure a des limites car du fait que le signal reçu soit une somme de modulations, les estimateurs précédents ne sont pas adaptés car ils ne permettent d'estimer qu'un seul paramètre à la fois, alors que par l'intermédiaire de notre formulation du problème, nous devons estimer 8 paramètres à la fois.

Dans ce contexte, nous proposons le procédé d'estimation de canal suivant. Ce procédé d'estimation de canal est décrit dans la **figure 20.** On injecte dans le procédé les échantillons $y(k)$ et $y_{\Delta\tau}(k)$ et on récupère en sortie les 8 filtres $\tilde{f}_m^0, \tilde{f}_m^{0,\Delta\tau}, \tilde{f}_m^1, \tilde{f}_m^{1,\Delta\tau}$ (m $\in$ {-1,1}) avec $i$ variant de $-\dfrac{N_t^m-1}{2}$ à $\dfrac{N_t^m-1}{2}$. On a la relation particulière suivante :

$$N_t^1 = N_t^0 - 2 = N_t - 2$$

Le procédé d'estimation du canal se fait de manière récursive et est décrit sur la **figure 21.** Notons $k$ l'itération, on appelle alors $\tilde{f}_m^0, \tilde{f}_m^{0,\Delta\tau}, \tilde{f}_m^1, \tilde{f}_m^{1,\Delta\tau}$ l'estimation des filtres à l'itération k.

Une initialisation de ces 8 filtres est tout d'abord réalisée. Il s'agit dans cette étape d'initialiser les vecteurs $\hat{f}_{0,0}^0, \hat{f}_{0,0}^1, \hat{f}_{0,0}^{0,\Delta\tau}, \hat{f}_{0,0}^{1,\Delta\tau}$ (respectivement $\hat{f}_{1,0}^0, \hat{f}_{1,0}^1, \hat{f}_{1,0}^{0,\Delta\tau}, \hat{f}_{1,0}^{1,\Delta\tau}$) de taille $N_t$ (respectivement $N_t$-2) avec les huit filtres estimés par la séquence pilote de la trame précédente (c'est-à-dire $\hat{f}_{0,k_f}^0, \dots, \hat{f}_{1,k_f}^1$, de la trame précédente). Pour la première trame, les filtres sont initialisés de cette manière (une trame est une séquence binaire composée d'une séquence pilote de longueur $L_p$ suivie d'une séquence de données utiles de taille $L_d$ :

On obtient alors :

$$\begin{cases} \hat{f}_{0,0}^0(i) = w_0(iT_b), pour\ i = -\dfrac{N_t - 1}{2}, \dots, \dfrac{N_t - 1}{2} \\[2mm] \hat{f}_{1,0}^0(i) = w_1(iT_b), pour\ i = -\dfrac{N_t - 3}{2}, \dots, \dfrac{N_t - 3}{2} \\[2mm] \hat{f}_{0,0}^{1,\Delta\tau} = w_0\big((i - \Delta\tau)T_b\big), pour\ i = -\dfrac{N_t - 1}{2}, \dots, \dfrac{N_t - 1}{2} \\[2mm] \hat{f}_{1,0}^{1,\Delta\tau} = w_1\big((i - \Delta\tau)T_b\big), pour\ i = -\dfrac{N_t - 3}{2}, \dots, \dfrac{N_t - 3}{2} \\[2mm] \hat{f}_{0,0}^{0,\Delta\tau}(i) = w_0((i + \Delta\tau)T_b), pour\ i = -\dfrac{N_t - 1}{2}, \dots, \dfrac{N_t - 1}{2} \\[2mm] \hat{f}_{1,0}^{0,\Delta\tau}(i) = w_1((i + \Delta\tau)T_b), pour\ i = -\dfrac{N_t - 3}{2}, \dots, \dfrac{N_t - 3}{2} \\[2mm] \hat{f}_{0,0}^1(i) = w_0(iT_b), pour\ i = -\dfrac{N_t - 1}{2}, \dots, \dfrac{N_t - 1}{2} \\[2mm] \hat{f}_{1,0}^1(i) = w_1(iT_b), pour\ i = -\dfrac{N_t - 3}{2}, \dots, \dfrac{N_t - 3}{2} \end{cases}$$

A partir des bits de préambule P(0) et P(1) ainsi que des signaux $y(k)$ et $y_{\Delta\tau}(k)$, on procède au calcul de deux fonctions d'erreur définies de la manière suivante :

$$e_k = y(k) - \left( \sum_{i=-\frac{(N_t-1)}{2}}^{i=\frac{(N_t-1)}{2}} \rho_{0,k-i}^0 \hat{f}_{0,k}^0(i) + \sum_{i=-\frac{(N_t-3)}{2}}^{i=\frac{(N_t-3)}{2}} \rho_{1,k-i}^0 \hat{f}_{1,k}^0(i) + \right.$$

$$\left. \sum_{i=-\frac{(N_t-1)}{2}}^{i=\frac{(N_t-1)}{2}} \rho_{0,k-i}^1 \hat{f}_{0,k}^{1,\Delta\tau}(i) + \sum_{i=-\frac{(N_t-3)}{2}}^{i=\frac{(N_t-3)}{2}} \rho_{1,k-i}^1 \hat{f}_{1,k}^{1,\Delta\tau}(i) \right)$$

$$e_k^{\Delta\tau} = y_{\Delta\tau}(k) - \left( \sum_{i=-\frac{(N_t-1)}{2}}^{i=\frac{(N_t-1)}{2}} \rho_{0,k-i}^0 \hat{f}_{0,k}^{0,\,\Delta\tau}(i) + \sum_{i=-\frac{(N_t-3)}{2}}^{i=\frac{(N_t-3)}{2}} \rho_{1,k-i}^0 \hat{f}_{1,k}^{0,\Delta\tau}(i) \right.$$

$$\left. + \sum_{i=-\frac{(N_t-1)}{2}}^{i=\frac{(N_t-1)}{2}} \rho_{0,k-i}^1 \hat{f}_{0,k}^1(i) + \sum_{i=-\frac{(N_t-3)}{2}}^{i=\frac{(N_t-3)}{2}} \rho_{1,k-i}^1 \hat{f}_{1,k}^1(i) \right)$$

pour $k = \frac{N_t-1}{2}$ , ...,$k_f$ avec $k_f = L_p - 1 - \frac{N_t-1}{2}$ .

La mise à jour des coefficients des filtres peut être réalisée par différents algorithmes d'estimation dont les plus classiques sont les suivants :

- L'algorithme LMS (en anglais « *Least Mean Square* »)
- L'algorithme RLS (en anglais « *Recursive Least Square* »)
- Filtrage de Kalman
- Tout algorithme dérivé des techniques précédentes.

Dans le cas particulier d'utilisation de l'algorithme LMS, on procède de la manière suivante.

A partir de ces fonctions d'erreurs et des bits de préambule P(0) et P(1), les coefficients des huit filtres sont mis à jour de la manière suivante :

$$\begin{cases} \hat{f}_{0,k+1}^0(i) = \hat{f}_{0,k}^0(i) + \mu \times e_k \times \left(\rho_{0,k-i}^0\right)^*, \, pour \, i = -\frac{N_t-1}{2}, ..., \frac{N_t-1}{2} \\[2mm] \hat{f}_{1,k+1}^0(i) = \hat{f}_{1,k}^0(i) + \mu \times e_k \times \left(\rho_{1,k-i}^0\right)^*, \, pour \, i = -\frac{N_t-3}{2}, ..., \frac{N_t-3}{2} \\[2mm] \hat{f}_{0,k+1}^{1,\Delta\tau}(i) = \hat{f}_{0,k}^{1,\Delta\tau}(i) + \mu \times e_k \times \left(\rho_{0,k-i}^1\right)^*, \, pour \, i = -\frac{N_t-1}{2}, ..., \frac{N_t-1}{2} \\[2mm] \hat{f}_{1,k+1}^{1,\Delta\tau}(i) = \hat{f}_{1,k}^{1,\Delta\tau}(i) + \mu \times e_k \times \left(\rho_{1,k-i}^1\right)^*, \, pour \, i = -\frac{N_t-3}{2}, ..., \frac{N_t-3}{2} \end{cases}$$

$$\begin{cases} \hat{f}_{0,k+1}^{0,\,\Delta\tau}(i) = \hat{f}_{0,k}^{0,\,\Delta\tau}(i) + \mu \times e_k^{\Delta\tau} \times \left(\rho_{0,k-i}^0\right)^*, \, pour \, i = -\frac{N_t-1}{2}, ..., \frac{N_t-1}{2} \\[2mm] \hat{f}_{1,k+1}^{0,\Delta\tau}(i) = \hat{f}_{1,k}^{0,\Delta\tau}(i) + \mu \times e_k^{\Delta\tau} \times \left(\rho_{1,k-i}^0\right)^*, \, pour \, i = -\frac{N_t-3}{2}, ..., \frac{N_t-3}{2} \\[2mm] \hat{f}_{0,k+1}^1(i) = \hat{f}_{0,k}^1(i) + \mu \times e_k^{\Delta\tau} \times \left(\rho_{0,k-i}^1\right)^*, \, pour \, i = -\frac{N_t-1}{2}, ..., \frac{N_t-1}{2} \\[2mm] \hat{f}_{1,k+1}^1(i) = \hat{f}_{1,k}^1(i) + \mu \times e_k^{\Delta\tau} \times \left(\rho_{1,k-i}^1\right)^*, \, pour \, i = -\frac{N_t-3}{2}, ..., \frac{N_t-3}{2} \end{cases}$$

avec $\mu$ le pas d'adaptation (sa valeur est constante et fixée au préalable), l'opérateur ()* représente le complexe conjugué.

Après cette étape d'estimation de canal, on injecte les estimations ainsi obtenues ainsi que les échantillons y(k) et $y_{\Delta\tau}(k)$ et dans un Treillis 1 qui a pour but de détecter la séquence binaire la plus probable et d'estimer les LLRs sur chaque bit d'information.

Le principe de construction du treillis est strictement identique à ce qui a été décrit dans l'architecture générique.

On utilise un algorithme de Viterbi cherchant à trouver la meilleure séquence de bits $\hat{\underline{S}}$ permettant de résoudre le problème suivant :

$$\underline{\hat{S}} = \underset{S}{\arg\min}\, \Lambda(\underline{S})$$

avec :

$$\Lambda(\underline{S}) = \sum_{n=0}^{(N-1)/4} \left( \sum_{m=-1}^{2} \left[ \left| B_{m,n}^{(0)} \right|^2 + \left| B_{m,n}^{(\Delta\tau)} \right|^2 \right] \right)$$

avec :

$$B_{m,n}^{(0)} = y(4n+m)$$

$$- \left( \sum_{i=-\frac{(N_t-1)}{2}}^{i=\frac{(N_t-1)}{2}} \rho_{0,4n+m-i}^{0} \hat{f}_{0,n_p}^{0}(i) + \sum_{i=-\frac{(N_t-3)}{2}}^{i=\frac{(N_t-3)}{2}} \rho_{1,4n+m-i}^{0} \hat{f}_{1,n_p}^{0}(i) \right.$$

$$\left. + \sum_{i=-\frac{(N_t-1)}{2}}^{i=\frac{(N_t-1)}{2}} \rho_{0,4n+m-i}^{1} \hat{f}_{0,n_p}^{1,\Delta\tau}(i) + \sum_{i=-\frac{(N_t-3)}{2}}^{i=\frac{(N_t-3)}{2}} \rho_{1,4n+m-i}^{1} \hat{f}_{1,n_p}^{1,\Delta\tau}(i) \right)$$

$$B_{m,n}^{(\Delta\tau)} = y_{\Delta\tau}(4n+m)$$

$$- \left( \sum_{i=-\frac{(N_t-1)}{2}}^{i=\frac{(N_t-1)}{2}} \rho_{0,4n+m-i}^{0} \hat{f}_{0,n_p}^{0,\,\Delta\tau}(i) + \sum_{i=-\frac{(N_t-3)}{2}}^{i=\frac{(N_t-3)}{2}} \rho_{1,4n+m-i}^{0} \hat{f}_{1,n_p}^{0,\Delta\tau}(i) \right.$$

$$\left. + \sum_{i=-\frac{(N_t-1)}{2}}^{i=\frac{(N_t-1)}{2}} \rho_{0,4n+m-i}^{1} \hat{f}_{0,n_p}^{1}(i) + \sum_{i=-\frac{(N_t-3)}{2}}^{i=\frac{(N_t-3)}{2}} \rho_{1,4n+m-i}^{1} \hat{f}_{1,n_p}^{1}(i) \right)$$

On récupère donc les bits d'information en employant un algorithme de Viterbi associé au treillis illustré sur la **figure 17.**

Le treillis considéré décrit les transitions d'un état $S_n = [b_{4n}\ b_{4n+1}\ b_{4n+2}\ b_{4n+3}]$ vers un état $S_{n+1} = [b_{4n+4}\ b_{4n+5}\ b_{4n+6}\ b_{4n+7}]$. Les transitions sont pondérées via la métrique de branche suivante :

$$\lambda(S_{n-1}(i) \to S_n(j)) = \sum_{m=-1}^{2} \left[ \left| B_{m,n}^{(0)} \right|^2 + \left| B_{m,n}^{(\Delta\tau)} \right|^2 \right]$$

Le treillis comporte donc 16 états, décrivant les 16 états possibles de la variable $S_n$. Le nombre de branches à calculer est alors de 256.

L'utilisation du treillis associé à cette architecture permet donc, à l'aide des métriques de banche définies ci-dessus, d'utiliser un algorithme de type SOVA afin de calculer les LLR sur les bits d'information.

La manière d'obtenir les LLRs sur les bits d'information est identique à celle utilisée dans le premier mode de réalisation.

### 6) Troisième mode de réalisation - architecture incluant un procédé d'égalisation avant démodulation par l'algorithme de Viterbi

Cette architecture de démodulation est décrite sur la **figure 22.** Cette architecture possède *N* entrées correspondant aux *N* séquences d'échantillons $r_{0,1}(n), ..., r_{0,N}(n)$ qui alimentent le démodulateur. Cette architecture nécessite aussi les estimations des retards $\Delta t_{0,1}, \Delta t_{1,1}, ... , \Delta t_{0,N}, \Delta t_{1,N}$ ainsi que les estimations des gains de canal $h_{0,1}, h_{1,1}, ... , h_{0,N}, h_{1,N}$. En sortie de cette architecture de démodulation, on obtient une séquence de bits démodulés avec sortie souple (LLR).

La séquence d'échantillons $r_{0,l}(n)$ avec *l* variant de 1 à N est d'abord filtrée par un filtre permettant d'optimiser le rapport signal à bruit. Il est possible alors d'utiliser un simple filtre adapté.

A l'aide des paramètres $\Delta t_{0,1}$ et $\Delta t_{1,1}$, on échantillonne d'une part le signal aux instants *kT* et d'autre part aux instants $kT + \Delta t_l$. On obtient alors respectivement les séquences d'échantillons $y_l(k)$ et $y_{\Delta\tau l}(k)$.

La somme $y_l(k) + y_{\Delta\tau l}(k)$ alimente alors un procédé d'égalisation qui, à l'aide des estimations des gains de canaux $h_{0,l}$ et $h_{1,l}$ permet de d'obtenir un vecteur $x_l$ qui entrent dans un treillis 2.

Le fait d'utiliser la somme $y_l(k) + y_{\Delta\tau l}(k)$ en entrée d'égalisation possède l'avantage de formuler simplement le procédé d'égalisation.

Les valeurs du vecteur $x_l$ sont alors adaptées à l'utilisation d'un treillis unique ayant un nombre d'états fixe.

L'utilisation de ce treillis permet alors d'estimer la séquence binaire émise la plus probable. D'autre part, l'utilisation d'un treillis unique ayant un nombre d'états fixe permet de calculer des LLR.

Le calcul des LLR sur les bits d'information peut alors être réalisé par l'intermédiaire d'un algorithme SOVA (en anglais « *Soft Output Viterbi Algorithm* »). La description de cet algorithme est donnée dans le document [A3].

Les avantages de cette architecture sont multiples.

1. La présence du filtrage de réduction de l'interférence entre symboles présent à l'entrée du démodulateur permet de réduire fortement la complexité des blocs d'égalisation et de simplifier le treillis utilisé pour l'algorithme de Viterbi.
2. La décomposition particulière du signal CPM sous forme de modulation de type OQPSK a pour conséquence de pouvoir utiliser un algorithme d'égalisation en amont du treillis et utiliser un treillis fixe.
3. La présence du bloc d'égalisation permet d'alimenter le treillis avec des données optimisées qui permettent d'utiliser un critère de maximum de vraisemblance dans l'algorithme de Viterbi.
4. Le treillis unique et fixe utilisé dans l'algorithme de Viterbi a pour avantage d'utiliser un algorithme de type SOVA afin de calculer les LLR sur les bits démodulés.
5. Même sans décodeur de canal pour décoder les LLRs, l'utilisation d'une décision dure (en anglais, « hard décision » par extraction du « Most Significant Bit », (MSB)) sur les LLRs conduit à une amélioration des performances.

Dans le cas particulier du STC-SOQPSK basé sur la recommandation IRIG-106, il est possible d'écrire le signal reçu en entrée de démodulateur sous la forme approximative suivante, supposant que l'offset de fréquence ait été parfaitement corrigé :

$$r_0(n) \approx h_0 \underbrace{\sum_i \rho_{0,i}^0 w_0(nT' - iT)}_{s_0(nT')} + h_1 \underbrace{\sum_i \rho_{0,i}^1 w_0(nT' - iT - \Delta\tau)}_{s_1(nT'-\Delta\tau)} + z(nT')$$

où :

- T' est le temps d'échantillonnage du convertisseur analogique-numérique (en conséquence *T' « T)*
- $w_0$ est l'impulsion principale de la décomposition du signal CPM sous forme de modulation OQPSK
- $h_0$, $h_1$ et $\Delta\tau$, sont respectivement le gain de canal issus de la propagation entre l'antenne émettrice 1 et l'antenne de réception, le gain de canal issus de la propagation entre l'antenne émettrice 2 et l'antenne de réception et le décalage temporel défini comme $\Delta\tau = \Delta t_1 - \Delta t_0$.
- z est un bruit additif
- $\rho_{0,i}^0$ et $\rho_{0,i}^1$ sont des pseudo-symboles dont l'expression analytique est respectivement :

$$\rho_{0,i}^p = \begin{cases} \left(2b_i^{(p)} - 1\right) \text{ si } i \text{ est pair} \\ j\left(2b_i^{(p)} - 1\right) \text{ si } i \text{ est impair} \end{cases}$$

- $b_i^{(0)}$ et $b_i^{(1)}$ sont respectivement les bits d'information alimentant le modulateur SOQPSK de la voie 1 et de la voie 2.

On constate ici que l'expression de $r_0(n)$ ne dépend que de l'impulsion principale $w_0$, qui est prépondérante par rapport à l'impulsion $w_1$ qui est négligeable.

On rappelle que $b_i^{(0)}$ et $b_i^{(1)}$ sont liées entre eux par l'intermédiaire du code de réarrangement binaire défini dans la recommandation IRIG-106. Le code de réarrangement binaire construit à partir de la séquence $b = \cdots b_{4k}, b_{4k+1}, b_{4k+2}, b_{4k+3}, \ldots$ les séquences :

$$\boldsymbol{b_u^{(0)}} = \cdots b_{4k}^{(0)}, b_{4k+1}^{(0)}, b_{4k+2}^{(0)}, b_{4k+3}^{(0)}, \ldots = \cdots b_{4k}, b_{4k+1}, \overline{b}_{4k+2}, b_{4k+3}, \ldots$$

$$\boldsymbol{b_u^{(1)}} = \cdots b_{4k}^{(1)}, b_{4k+1}^{(1)}, b_{4k+2}^{(1)}, b_{4k+3}^{(1)}, \ldots = \cdots b_{4k+2}, b_{4k+3}, b_{4k}, \overline{b}_{4k+1}, \ldots$$

où l'opération $\overline{x}$ représente l'opération d'inversion binaire du bit $x$.

On note enfin $\beta_i$ le symbole de l'alphabet {+1,-1} défini par :

$$\beta_i = 2b_i - 1$$

Les échantillons $r_0(n)$ sont alors filtrés par un filtre permettant de réduire l'interférence entre symboles. En effet, comme $w_0$ est une impulsion ayant un support temporel plus grands que T, une interférence entre symboles est présente dans le signal reçu.

Ce filtre doit posséder les caractéristiques suivantes :

- Il ne doit pas colorer la composante de bruit présente dans le signal reçu
- Il doit avoir une bande passante plus large que celle du signal utile.
- Il doit réduire l'interférence entre symboles.

Un filtre adapté ou en anglais, « matched filter » peut être suffisant. Cependant, il a l'inconvénient d'introduire une forte interférence entre symboles.

Différents filtres satisfaisant les conditions ci-dessus sont possibles. La référence [A8] présente plusieurs filtres pouvant être utilisés dans ce cas de figure.

[A8] Geoghegan, Mark, "Optimal Linear Detection of SOQPSK," in International Telemetering Conférence Proceedings, Oct. 2002

Le filtre $g$ présenté dans la **figure 23** a été déterminé de sorte à satisfaire les conditions ci-dessus.

Ce filtre est composé d'un filtre adapté à $w_0$ et d'un filtre de Wiener construit à l'aide du critère MMSE (en anglais « Minimum Mean Square Error ») afin de réduire les interférences introduites par $w_0$. Les coefficients du filtre de Wiener $c_{wf}$ sont calculés en utilisant la méthode donnée dans [A9].

[A9] : G. K. Kaleh, "Simple cohérent receivers for partial response continuous phase modulation," in IEEE Journal on Selected Areas in Communications, vol. 7, no. 9, pp. 1427-1436, Dec. 1989.

Le filtre $g$ est donc donné par la formule suivante : $g(t) = \sum_{k=-\infty}^{+\infty} c_{wf}(k) w_0(-t + 2kT)$

Ainsi, en sortie de ce filtre et après les opérations d'échantillonnage au rythme symbole, nous avons :

$$y(4k) = h_0 \sum_{i=-1}^{1} \rho_{0,4k-i}^0 \widetilde{w}_0(iT) + h_1 \sum_{i=-1}^{1} \rho_{0,4k-i}^1 \widetilde{w}_0(iT - \Delta\varepsilon T) + \tilde{n}(4kT)$$

$$y_{\Delta\tau}(4k) = h_0 \sum_{i=-1}^{1} \rho_{0,4k-i}^0 \widetilde{w}_0(iT + \Delta\varepsilon T) + h_1 \sum_{i=-1}^{1} \rho_{0,4k-i}^1 \widetilde{w}_0(iT) + \tilde{n}(4kT + \Delta\varepsilon T)$$

où $\widetilde{w}_0$ est le résultat du produit de convolution entre l'impulsion $w_0$ et le filtre $g$, $\tilde{n}$ est le résultat du produit de convolution entre le bruit $z$ et le filtre $g$ et $\Delta\varepsilon$ étant l'entier le plus proche de la division de $\Delta\tau$ par T.

La possibilité d'utiliser une technique d'égalisation provient du fait que l'on considère la métrique suivante à son entrée :

$$B_m^k = \frac{1}{2}\big(y(4k + m) + y_{\Delta\tau}(4k + m)\big)$$

Cette métrique a pour avantage de prendre en compte le décalage temporel $\Delta\tau$.

D'autre part, la connaissance des estimations de $h_0$ et $h_1$ permettent de construire la matrice suivante :

$$\boldsymbol{H} = \begin{bmatrix} h_0 & h_1 \\ h_1^* & -h_0^* \end{bmatrix}$$

avec $x^*$ l'opération de conjugaison du complexe $x$.

On définit alors :

$$\begin{bmatrix} l_0^k \\ l_1^k \end{bmatrix} = Re\left(\boldsymbol{H}^H \begin{bmatrix} B_0^k \\ B_1^k \end{bmatrix}\right)$$

$$\begin{bmatrix} l_2^k \\ l_3^k \end{bmatrix} = Im\left(\boldsymbol{H}^H \begin{bmatrix} B_2^k \\ B_3^k \end{bmatrix}\right)$$

avec $Re(x)$ la partie réelle de $x$, $Im(x)$ la partie imaginaire de $x$ et $H^H$ la transposée-conjuguée de la matrice $\boldsymbol{H}$.

En posant alors :

$$\underline{x} = (l_0^0, l_2^0, l_1^0, l_3^0, l_0^1, l_2^1, l_1^1, l_3^1, \ldots, l_0^{K-1}, l_2^{K-1}, l_1^{K-1}, l_3^{K-1})^T$$

$$\underline{b} = (\beta_0, \beta_1, \beta_2, \beta_3, \beta_4, \beta_5, \beta_6, \beta_7, \ldots, \beta_{4K-4}, \beta_{4K-3}, \beta_{4K-2}, \beta_{4K-1})^T$$

avec $T$ l'opération de transposition d'un vecteur. On obtient la relation :

$$\underline{x} = \boldsymbol{G}\underline{b} + \underline{u}$$

où G est une matrice de taille $4K\text{x}4K$ et $\underline{u}$ est un vecteur de bruit.

Le principal intérêt de cette formulation ci-dessous est qu'il est possible d'utiliser un algorithme d'estimation par maximum de vraisemblance pour estimer la séquence $\underline{b}$ la plus probable.

La formulation du problème consiste à maximiser l'expression de la vraisemblance suivante :

$$\Lambda\big(\underline{x}, \underline{b}\big) = 2\underline{b}^T\underline{x} - \underline{b}^T\boldsymbol{G}\underline{b}$$

La maximisation de cette valeur se fait donc classiquement par l'intermédiaire d'un algorithme de Viterbi. Cet algorithme de Viterbi emploie le treillis 2 composé de 64 états et 128 branches représenté sur la **figure 24.** On utilise les métriques de branche suivantes :

$$\lambda(n) = \begin{cases} \beta_n(2x_n - (D - C)\zeta\beta_{n+3} - C\zeta\beta_{n+1} - D\zeta\beta_{n-3}) - A\chi|\beta_n|^2 & \text{si } n = 4k \\ \beta_n(2x_n - (D - C)\zeta\beta_{n+1} - C\zeta\beta_{n-1} - D\zeta\beta_{n+3}) - A\chi|\beta_n|^2 & \text{si } n = 4k + 1 \\ \beta_n(2x_n - (D - C)\zeta\beta_{n-1} - D\zeta\beta_{n+1} - C\zeta\beta_{n-3}) - A\chi|\beta_n|^2 & \text{si } n = 4k + 2 \\ \beta_n(2x_n \qquad\qquad\quad - D\zeta\beta_{n-1} - C\zeta\beta_{n+3}) - A\chi|\beta_n|^2 & \text{si } n = 4k + 3 \end{cases}$$

avec

$$\chi = |h_0|^2 + |h_1|^2$$

$$\zeta = Im(h_0^* h_1)$$

$$A = \frac{1}{2}(\widetilde{w}_0(0) + \widetilde{w}_0(\Delta\varepsilon T))$$

$$C = \frac{1}{2}(\widetilde{w}_0(-T) + \widetilde{w}_0(-T + \Delta\varepsilon T))$$

$$D = \frac{1}{2}(\widetilde{w}_0(T) + \widetilde{w}_0(T + \Delta\varepsilon T))$$

L'utilisation du treillis associé à cette architecture permet donc, à l'aide des métriques de banche définies ci-dessus, d'utiliser un algorithme de type SOVA afin de calculer les LLR sur les bits d'information.

La manière d'obtenir les LLRs sur les bits d'information est identique à la procédure décrite dans l'architecture générique.

## Revendications

1. Procédé de réception d'un signal CPM, Continuous Phase Modulation, avec codage spatio temporel, ledit signal étant un signal SOQPSK-TG, Shaped Offset Quadrature Phase Shift Keying - Telemetry Group, basé sur la recommandation IRIG-106 émis depuis deux antennes émettrices notées A1, A2, le signal reçu modulant une pluralité de bits $b_i^{(j)}$ j=0 ou 1, qui correspond aux bits émis sur l'antenne A1 et A2 respectivement, ledit signal reçu comprenant un décalage temporel $\Delta\tau$ tenant compte du décalage temporel entre les signaux émis depuis chaque antenne A1, A2, ledit signal étant reçu sur une ou plusieurs antennes réceptrices A3 ; le procédé comprend les étapes suivantes :

    - obtention sur une antenne d'un signal numérique échantillonné y(k) et de sa version décalée $y_{\Delta\tau}$(k) tenant compte du décalage temporel entre les deux antennes d'émission chacun comprenant les contributions des signaux issus des deux antennes émettrices, lesdits signaux numériques pouvant s'exprimer selon la décomposition suivante :

$$s_p(t) \approx \sum_i \rho_{0,2i}^p w_0(t - 2iT_b) - \rho_{1,2i+1}^p w_1(t - 2iT_b - T_b)$$
$$+ \left( \sum_i \rho_{0,2i+1}^p w_0(t - 2iT_b - T_b) - \rho_{1,2i}^p w_1(t - 2iT_b) \right)$$

où :

- $T_b$ est la durée d'un bit ;

$$p \in \{0,1\}$$

- $\rho_{0,i}^0, \rho_{1,i}^0$ sont des pseudo-symboles correspondant aux bits d'information $b_i^{(0)}$ émis sur l'antenne A1,

$\rho_{0,i}^1, \rho_{1,i}^1$ sont des pseudo-symboles correspondant aux bits d'information $b_i^{(1)}$ émis sur l'antenne A2 ;

- $w_0(t)$ et $w_1(t)$ sont des impulsions de mise en forme, respectivement une impulsion principale et une impulsion secondaire;

le procédé **caractérisé par** les étapes suivantes:

- définition d'un algorithme de Viterbi (Treillis 1, Treillis 2) ayant un treillis avec un nombre d'états fixes et des métriques également fonction d'au moins ladite impulsion principale ;

- obtention au moyen dudit algorithme de Viterbi, de LLR, Log Likelihood Ratio, sur les bits d'information émis.

2. Procédé de réception selon la revendication 1, dans lequel les signaux numériques obtenus ont pour expression

$$y(k) \approx \sum_{m=0}^{1} \sum_{i=-\frac{N_t^m-1}{2}}^{\frac{N_t^m-1}{2}} \rho_{m,k-i}^0 \tilde{f}_m^0(i) + \sum_{m=0}^{1} \sum_{i=-\frac{N_t^m-1}{2}}^{\frac{N_t^m-1}{2}} \rho_{m,k-i}^1 \tilde{f}_m^{1,\Delta\tau}(i) + z(kT + \Delta\tau_0)$$

$$y_{\Delta\tau}(k) \approx \sum_{m=0}^{1} \sum_{i=-\frac{N_t^m-1}{2}}^{\frac{N_t^m-1}{2}} \rho_{m,k-i}^0 \tilde{f}_m^{0,\Delta\tau}(i) + \sum_{m=0}^{1} \sum_{i=-\frac{N_t^m-1}{2}}^{\frac{N_t^m-1}{2}} \rho_{m,k-i}^1 \tilde{f}_m^1(i) + z(kT + \Delta\tau_1)$$

où :

- $\Delta\tau = \Delta\tau_1 - \Delta\tau_0$ où $\Delta\tau_0$ est le retard du trajet direct depuis l'antenne A1 et $\Delta\tau_1$ est le retard du trajet direct depuis l'antenne A2, $\Delta\tau$ est le décalage temporel ;

- $\Delta\varepsilon$ est l'entier le plus proche de la division de $\Delta\tau$ par T;

- $\rho_{0,i}^0, \rho_{1,i}^0$ sont des pseudo-symboles correspondant aux bits d'information émis sur l'antenne A1, $\rho_{0,i}^1, \rho_{1,i}^1$ sont des pseudo-symboles correspondant aux bits d'information émis sur l'antenne A2 ;

- $\delta(t)$ est l'impulsion de Dirac centrée en 0 ;

- $N_t^m$ est la longueur des filtres $\tilde{f}_m^0, \tilde{f}_m^{0,\Delta\tau}, \tilde{f}_m^1, \tilde{f}_m^{1,\Delta\tau}$ ;

- z est un bruit additif.

3. Procédé selon la revendication 2, dans lequel les valeurs $\tilde{f}_m^0, \tilde{f}_m^{0,\Delta\tau}, \tilde{f}_m^1, \tilde{f}_m^{1,\Delta\tau}$ sont définies de la manière suivante :

$$\tilde{f}_m^p(i) = \tilde{f}_m^p(t = iT)$$

$$\tilde{f}_m^{0,\Delta\tau}(i) = \tilde{f}_m^0(t = iT + \Delta\varepsilon T)$$

$$\tilde{f}_m^{1,\Delta\tau}(i) = \tilde{f}_m^0(t = iT - \Delta\varepsilon T)$$

avec

$$\tilde{f}_m^p(t) = \int f_m^k(\theta)g(\theta - t)d\theta$$

et

$$f_m^0(t) = w_m(t) * \left( h_0\delta(t) + \sum_{i=1}^{N_0} h_{2i}\delta(t - (\Delta\tau_{2i} - \Delta\tau_0)) \right), m \in \{0,1\}$$

$$f_m^1(t) = w_m(t) * \left( h_1\delta(t) + \sum_{i=1}^{N_1} h_{2i+1}\delta(t - (\Delta\tau_{2i+1} - \Delta\tau_1)) \right), m \in \{0,1\}$$

où $N_0$, $N_1$ sont le nombre de trajets multiples respectivement issu de l'antenne noté A1 etA2.

4. Procédé selon l'une des revendications précédentes, comprenant préalablement à l'étape d'obtention des signaux $y(k)$ et de sa version décalée $y_{\Delta\tau}(k)$ d'une étape de filtrage (E51) du signal reçu au moyen d'un filtre passe-bas à réponse impulsionnelle finie FIR, Finite Impulse Response, de type Equiripple construit numériquement de telle façon que la fréquence de coupure normalisée est 0,45.

5. Procédé selon l'une des revendications précédentes, dans lequel en l'absence de trajets-multiples, les signaux numériques obtenus sont regroupés par groupes de 4 échantillons, et ont pour expression

$$y(4k) = h_0 \sum_{i=-1}^{1} \rho_{0,4k-i}^0 \widetilde{w}_0(iT) + h_0\rho_{1,4k}^0\widetilde{w}_1(0) + h_1 \sum_{i=-1}^{1} \rho_{0,4k-i}^1 \widetilde{w}_0(iT - \Delta\varepsilon T)$$
$$+ h_1\rho_{1,4k}^1\widetilde{w}_1(-\Delta\varepsilon T) + \tilde{n}(4kT)$$

$$y_{\Delta\tau}(4k) = h_0 \sum_{i=-1}^{1} \rho_{0,4k-i}^0 \widetilde{w}_0(iT + \Delta\varepsilon T) + h_0\rho_{1,4k}^0\widetilde{w}_1(\Delta\varepsilon T) + h_1 \sum_{i=-1}^{1} \rho_{0,4k-i}^1 \widetilde{w}_0(iT)$$
$$+ h_1\rho_{1,4k}^1\widetilde{w}_1(0) + \tilde{n}(4kT + \Delta\varepsilon T)$$

où $\widetilde{w}_0$ et $\widetilde{w}_1$ sont des versions filtrées d'une impulsion principale $w_0$ et d'une impulsion secondaire $w_1$.

6. Procédé selon la revendication précédente, dans lequel les métriques de l'algorithme de Viterbi sont définies par

$$\lambda(S_{n-1}(i) \to S_n(j)) = \sum_{m=-1}^{2} \left[ \left|B_{m,n}^{(0)}\right|^2 + \left|B_{m,n}^{(\Delta\tau)}\right|^2 \right]$$

avec

$$B_{m,n}^{(0)} = y(4n + m) - h_0 \left( \sum_{i=-1}^{1} \rho_{0,4n+m-i}^0 \widetilde{w}_0(iT) + \rho_{1,4n+m}^0 \widetilde{w}_1(0) \right)$$
$$- h_1 \left( \sum_{i=-1}^{1} \rho_{0,4n+m-i}^1 \widetilde{w}_0(iT - \Delta\varepsilon T) + \rho_{1,4n+m}^1 \widetilde{w}_1(-\Delta\varepsilon T) \right)$$

$$B_{m,n}^{(\Delta\tau)} = y_{\Delta\tau}(4n+m) - h_0\left(\sum_{i=-1}^{1} \rho_{0,4n+m-i}^0 \widetilde{w}_0(iT + \Delta\varepsilon T) + \rho_{1,4n+m}^0 \ \widetilde{w}_1(\Delta\varepsilon T)\right)$$

$$- h_1\left(\sum_{i=-1}^{1} \rho_{0,4n+m-i}^1 \widetilde{w}_0(iT) + \rho_{1,4n+m}^1 \ \widetilde{w}_1(0)\right)$$

où $\widetilde{w}_0$ et $\widetilde{w}_1$ sont des versions filtrées d'une impulsion principale $w_0$ et d'une impulsion secondaire $w_1$.

7. Procédé selon l'une des revendications 1 à 3, dans lequel en présence de trajets multiples, le procédé comprend une étape (E54') d'estimation du canal de propagation de manière à obtenir les estimés de $\tilde{f}_m^0, \tilde{f}_m^{0,\Delta\tau}, \tilde{f}_m^1, \tilde{f}_m^{1,\Delta\tau}$, l'algorithme de Viterbi utilisant les paramètres estimés du canal, les métriques de l'algorithme de Viterbi étant définies par

$$\lambda(S_{n-1}(i) \rightarrow S_n(j)) = \sum_{m=-1}^{2} \left[\left|B_{m,n}^{(0)}\right|^2 + \left|B_{m,n}^{(\Delta\tau)}\right|^2\right]$$

avec

$$B_{m,n}^{(0)} = y(4n+m)$$

$$- \left(\sum_{i=-\frac{(N_t-1)}{2}}^{i=\frac{(N_t-1)}{2}} \rho_{0,4n+m-i}^0 \hat{f}_{0,n_p}^0(i) + \sum_{i=-\frac{(N_t-3)}{2}}^{i=\frac{(N_t-3)}{2}} \rho_{1,4n+m-i}^0 \hat{f}_{1,n_p}^0(i)\right.$$

$$+ \sum_{i=-\frac{(N_t-1)}{2}}^{i=\frac{(N_t-1)}{2}} \rho_{0,4n+m-i}^1 \hat{f}_{0,n_p}^{1,\Delta\tau}(i) + \left.\sum_{i=-\frac{(N_t-3)}{2}}^{i=\frac{(N_t-3)}{2}} \rho_{1,4n+m-i}^1 \hat{f}_{1,n_p}^{1,\Delta\tau}(i)\right)$$

$$B_{m,n}^{(\Delta\tau)} = y_{\Delta\tau}(4n+m)$$

$$- \left(\sum_{i=-\frac{(N_t-1)}{2}}^{i=\frac{(N_t-1)}{2}} \rho_{0,4n+m-i}^0 \hat{f}_{0,n_p}^{0,\ \Delta\tau}(i) + \sum_{i=-\frac{(N_t-3)}{2}}^{i=\frac{(N_t-3)}{2}} \rho_{1,4n+m-i}^0 \hat{f}_{1,n_p}^{0,\Delta\tau}(i)\right.$$

$$+ \sum_{i=-\frac{(N_t-1)}{2}}^{i=\frac{(N_t-1)}{2}} \rho_{0,4n+m-i}^1 \hat{f}_{0,n_p}^1(i) + \left.\sum_{i=-\frac{(N_t-3)}{2}}^{i=\frac{(N_t-3)}{2}} \rho_{1,4n+m-i}^1 \hat{f}_{1,n_p}^1(i)\right)$$

8. Procédé selon l'une des revendications 1 à 3, dans lequel en présence de trajets multiples, le procédé comprend une étape d'égalisation, l'algorithme de Viterbi utilisant le signal égalisé, la métrique pour chaque noeud du Viterbi étant définie par

$$\lambda(n) = \begin{cases} \beta_n(2x_n - (D - C)\zeta\beta_{n+3} - C\zeta\beta_{n+1} - D\zeta\beta_{n-3}) - A\chi|\beta_n|^2 & \text{si } n = 4k \\ \beta_n(2x_n - (D - C)\zeta\beta_{n+1} - C\zeta\beta_{n-1} - D\zeta\beta_{n+3}) - A\chi|\beta_n|^2 & \text{si } n = 4k+1 \\ \beta_n(2x_n - (D - C)\zeta\beta_{n-1} - D\zeta\beta_{n+1} - C\zeta\beta_{n-3}) - A\chi|\beta_n|^2 & \text{si } n = 4k+2 \\ \beta_n(2x_n \qquad\qquad - D\zeta\beta_{n-1} - C\zeta\beta_{n+3}) - A\chi|\beta_n|^2 & \text{si } n = 4k+3 \end{cases}$$

avec

$$\chi = |h_0|^2 + |h_1|^2$$

$$\zeta = Im(h_0^* h_1)$$

$$A = \frac{1}{2}(\widetilde{w}_0(0) + \widetilde{w}_0(\Delta\varepsilon T))$$

$$C = \frac{1}{2}(\widetilde{w}_0(-T) + \widetilde{w}_0(-T + \Delta\varepsilon T))$$

$$D = \frac{1}{2}(\widetilde{w}_0(T) + \widetilde{w}_0(T + \Delta\varepsilon T))$$

où $\widetilde{w}_0$ et $\widetilde{w}_1$ sont des versions filtrées d'une impulsion principale $w_0$ et d'une impulsion secondaire $w_1$.

9. Procédé selon l'une des revendications précédentes, dans lequel les pseudo-symboles $\rho_{0,i}^0, \rho_{1,i}^0$ correspondant aux bits d'informations émis sur les antennes A1, A2, ont pour expression

$$\rho_{0,i}^p = \begin{cases} \left(2b_i^{(p)} - 1\right) & \text{si } i \text{ est pair} \\ j\left(2b_i^{(p)} - 1\right) & \text{si } i \text{ est impair} \end{cases}$$

$$\rho_{1,i}^p = \begin{cases} -j\left(2b_{i-2}^{(p)} - 1\right)\left(2b_{i-1}^{(p)} - 1\right)\left(2b_i^{(p)} - 1\right) & \text{si } i \text{ est pair} \\ -\left(2b_{i-2}^{(p)} - 1\right)\left(2b_{i-1}^{(p)} - 1\right)\left(2b_i^{(p)} - 1\right) & \text{si } i \text{ est impair} \end{cases}$$

10. Procédé selon l'une des revendications précédentes, comprenant une étape de décodage des LLRs au moyen d'un décodeur de canal ou l'obtention des bits de poids fort des LLRs.

11. Dispositif de réception comprenant une unité de traitement configurée pour mettre en oeuvre un procédé selon l'une des revendications précédentes.

12. Produit programme d'ordinateur comprenant des instructions de codes pour l'exécution d'un procédé selon l'une des revendications 1 à 10, lorsque celui-ci est exécuté par un processeur.


**Patentansprüche**

1. Verfahren zum Empfangen eines CPM-Signals, Continuous Phase Modulation, mit Raum-Zeit-Codierung, wobei das Signal ein SOQPSK-TG-Signal, Shaped Offset Quadrature Phase Shift Keying - Telemetry Group, ist, basierend auf der Richtlinie IRIG-106 von zwei Emissionsantennen, die mit A1, A2, bezeichnet sind, wobei das empfangene Signal eine Vielzahl von Bits $b_i^{(j)}$ j=0 oder 1 moduliert, die den Bits entspricht, die jeweils auf der Antenne A1 und A2 emittiert werden, wobei das empfangene Signal eine Zeitverschiebung $\Delta\tau$ umfasst, die die Zeitverschiebung zwischen den Signalen berücksichtigt, die von jeder Antenne A1, A2 emittiert werden, wobei das Signal von einer oder mehreren Empfangsantennen A3 empfangen wird; wobei das Verfahren die folgenden Schritte umfasst:

- Erhalten, auf einer Antenne, eines abgetasteten digitalen Signals y(k) und seiner verschobenen Version $y_{\Delta}\tau(k)$, die Zeitverschiebung zwischen den zwei Emissionsantennen berücksichtigend, wobei jedes die Beiträge der Signale umfasst, die von den zwei Emissionsantennen stammen, wobei die digitalen Signale in der folgenden Aufschlüsselung ausgedrückt werden können:

$$s_p(t) \approx \sum_i \rho_{0,2i}^p w_0(t - 2iT_b) - \rho_{1,2i+1}^p w_1(t - 2iT_b - T_b)$$
$$+ \left( \sum_i \rho_{0,2i+1}^p w_0(t - 2iT_b - T_b) - \rho_{1,2i}^p w_1(t - 2iT_b) \right)$$

wobei:

- $T_b$ die Dauer eines Bits ist;

$$\rho \in \{0,1\}$$

- $\rho_{0,i}^0$ , $\rho_{1,i}^0$ die Pseudosymbole sind, die den Informationsbits $b_i^{(0)}$ entsprechen, die auf der Antenne A1 emittiert werden, und $\rho_{0,i}^1$, $\rho_{1,i}^1$ die Pseudosymbole sind, die den Informationsbits $b_i^{(1)}$ entsprechen, die auf der Antenne A2 emittiert werden;

- $w_0 (t)$ und $w_1 (t)$ Formatierungsimpulse sind, jeweils ein Hauptimpuls und ein Sekundärimpuls;

das Verfahren durch die folgenden Schritte gekennzeichnet ist:

- Definition eines Viterbi-Algorithmus (Trellis 1, Trellis 2) mit einem Trellis mit einer Anzahl von festen Zuständen und Metriken, die auch eine Funktion von mindestens dem Hauptimpuls haben;
- Erhalten des LLR, Log Likelihood Ratio, mittels des Viterbi-Algorithmus, auf den emittierten Informationsbits.

2. Empfangsverfahren nach Anspruch 1, wobei die erhaltenen digitalen Signale als Ausdruck haben

$$y(k) \approx \sum_{m=0}^{1} \sum_{i=-\frac{N_t^m-1}{2}}^{\frac{N_t^m-1}{2}} \rho_{m,k-i}^0 \tilde{f}_m^0(i) + \sum_{m=0}^{1} \sum_{i=-\frac{N_t^m-1}{2}}^{\frac{N_t^m-1}{2}} \rho_{m,k-i}^1 \tilde{f}_m^{1,\Delta\tau}(i) + z(kT + \Delta\tau_0)$$

$$y_{\Delta\tau}(k) \approx \sum_{m=0}^{1} \sum_{i=-\frac{N_t^m-1}{2}}^{\frac{N_t^m-1}{2}} \rho_{m,k-i}^0 \tilde{f}_m^{0,\Delta\tau}(i) + \sum_{m=0}^{1} \sum_{i=-\frac{N_t^m-1}{2}}^{\frac{N_t^m-1}{2}} \rho_{m,k-i}^1 \tilde{f}_m^1(i) + z(kT + \Delta\tau_1)$$

wobei:

- $\Delta\tau = \Delta\tau_1 - \Delta\tau_0$, wobei $\Delta\tau_0$ die Verzögerung des direkten Weges von der Antenne A1 ist und $\Delta\tau_1$ die Verzögerung des direkten Weges von der Antenne A2 ist und $\Delta\tau$ die Zeitverschiebung ist;
- $\Delta\varepsilon$ die Ganzzahl ist, die der Division von $\Delta\tau$ durch $T$ am nächsten kommt;

- $\rho_{0,i}^{0}$ , $\rho_{1,i}^{0}$ Pseudosymbole sind, die den Informationsbits entsprechen, die auf der Antenne A1 emittiert werden, und $\rho_{0,i}^{1}, \rho_{1,i}^{1}$ Pseudosymbole sind, die den Informationsbits entsprechen, die auf der Antenne A2 emittiert werden;

- $\delta(t)$ der Dirac-Impuls ist, der auf 0 zentriert ist;

- $N_{t}^{m}$ die Länge der Filter $\tilde{f}_{m}^{o}, \tilde{f}_{m}^{o,\Delta\tau}, \tilde{f}_{m}^{1}, \tilde{f}_{m}^{1,\Delta\tau}$ ist;

- z ein additives Rauschen ist.

3. Verfahren nach Anspruch 2, wobei die Werte $\tilde{f}_{m}^{o}, \tilde{f}_{m}^{o,\Delta\tau}, \tilde{f}_{m}^{1}, \tilde{f}_{m}^{1,\Delta\tau}$ wie folgt definiert sind:

$$\tilde{f}_{m}^{p}(i) = \tilde{f}_{m}^{p}(t = iT)$$

$$\tilde{f}_{m}^{0,\Delta\tau}(i) = \tilde{f}_{m}^{0}(t = iT + \Delta\varepsilon T)$$

$$\tilde{f}_{m}^{1,\Delta\tau}(i) = \tilde{f}_{m}^{0}(t = iT - \Delta\varepsilon T)$$

mit

$$\tilde{f}_{m}^{p}(t) = \int f_{m}^{k}(\theta)g(\theta - t)d\theta$$

und

$$f_{m}^{0}(t) = w_{m}(t) * \left( h_{0}\delta(t) + \sum_{i=1}^{N_{0}} h_{2i}\delta(t - (\Delta\tau_{2i} - \Delta\tau_{0})) \right), m \in \{0,1\}$$

$$f_{m}^{1}(t) = w_{m}(t) * \left( h_{1}\delta(t) + \sum_{i=1}^{N_{1}} h_{2i+1}\delta(t - (\Delta\tau_{2i+1} - \Delta\tau_{1})) \right), m \in \{0,1\}$$

wobei $N_{0}$, $N_{1}$ die Anzahl der Mehrfachwege sind, die jeweils von den Antennen stammen, die mit A1 und A2 bezeichnet sind.

4. Verfahren nach einem der vorhergehenden Ansprüche, umfassend, vor dem Schritt des Erhaltens der Signale y(k) und ihrer verschobenen Version $y_{\Delta\tau}(k)$, einen Filtrationsschritt (E51) des empfangenen Signals mittels eines FIR-Tiefbassfilters mit endlicher Impulsantwort, Finite Impulse Response, vom Typ Equiripple, der numerisch so konstruiert ist, dass die normalisierte Grenzfrequenz 0,45 beträgt.

5. Verfahren nach einem der vorhergehenden Ansprüche, wobei, in Abwesenheit von Mehrfachwegen, die erhaltenen digitalen Signale in Gruppen von 4 Abtastwerten zusammengefasst sind, und als Ausdruck haben

$$y(4k) = h_0 \sum_{i=-1}^{1} \rho_{0,4k-i}^{0} \widetilde{w}_0(iT) + h_0\rho_{1,4k}^{0}\widetilde{w}_1(0) + h_1 \sum_{i=-1}^{1} \rho_{0,4k-i}^{1}\widetilde{w}_0(iT - \Delta\varepsilon T)$$
$$+ h_1\rho_{1,4k}^{1}\widetilde{w}_1(-\Delta\varepsilon T) + \tilde{n}(4kT)$$

$$y_{\Delta\tau}(4k) = h_0 \sum_{i=-1}^{1} \rho_{0,4k-i}^{0}\widetilde{w}_0(iT + \Delta\varepsilon T) + h_0\rho_{1,4k}^{0}\widetilde{w}_1(\Delta\varepsilon T) + h_1 \sum_{i=-1}^{1} \rho_{0,4k-i}^{1}\widetilde{w}_0(iT)$$
$$+ h_1\rho_{1,4k}^{1}\widetilde{w}_1(0) + \tilde{n}(4kT + \Delta\varepsilon T)$$

wobei $\tilde{w}_0$ und $\tilde{w}_1$ gefilterte Versionen eines Hauptimpulses $w_0$ und eines Sekundärimpulses $w_1$ sind.

**6.** Verfahren nach dem vorhergehenden Anspruch, wobei die Metriken des Viterbi-Algorithmus definiert sind durch

$$\lambda(S_{n-1}(i) \to S_n(j)) = \sum_{m=-1}^{2} \left[ \left| B_{m,n}^{(0)} \right|^2 + \left| B_{m,n}^{(\Delta\tau)} \right|^2 \right]$$

mit

$$B_{m,n}^{(0)} = y(4n+m) - h_0 \left( \sum_{i=-1}^{1} \rho_{0,4n+m-i}^{0}\widetilde{w}_0(iT) + \rho_{1,4n+m}^{0}\widetilde{w}_1(0) \right)$$

$$- h_1 \left( \sum_{i=-1}^{1} \rho_{0,4n+m-i}^{1}\widetilde{w}_0(iT - \Delta\varepsilon T) + \rho_{1,4n+m}^{1}\widetilde{w}_1(-\Delta\varepsilon T) \right)$$

$$B_{m,n}^{(\Delta\tau)} = y_{\Delta\tau}(4n+m) - h_0 \left( \sum_{i=-1}^{1} \rho_{0,4n+m-i}^{0}\widetilde{w}_0(iT + \Delta\varepsilon T) + \rho_{1,4n+m}^{0}\widetilde{w}_1(\Delta\varepsilon T) \right)$$

$$- h_1 \left( \sum_{i=-1}^{1} \rho_{0,4n+m-i}^{1}\widetilde{w}_0(iT) + \rho_{1,4n+m}^{1}\widetilde{w}_1(0) \right)$$

wobei $\tilde{w}_0$ und $\tilde{w}_1$ gefilterte Versionen eines Hauptimpulses $w_0$ und eines Sekundärimpulses $w_1$ sind.

**7.** Verfahren nach einem der Ansprüche 1 bis 3, wobei, in Gegenwart von Mehrfachwegen, das Verfahren einen Schritt (E54') der Schätzung des Ausbreitungskanals umfasst, um die Schätzungen von $\tilde{f}_m^{\,o}, \ \tilde{f}_m^{\,o,\Delta\tau}, \ \tilde{f}_m^{\,1}, \ \tilde{f}_m^{\,1,\Delta\tau}$ zu erhalten, wobei der Viterbi-Algorithmus die geschätzten Parameter des Kanals verwendet, wobei die Metriken des Viterbi-Algorithmus definiert sind durch

$$\lambda(S_{n-1}(i) \to S_n(j)) = \sum_{m=-1}^{2} \left[ \left| B_{m,n}^{(0)} \right|^2 + \left| B_{m,n}^{(\Delta\tau)} \right|^2 \right]$$

mit

$$B_{m,n}^{(0)} = y(4n+m)$$

$$- \left( \sum_{i=-\frac{(N_t-1)}{2}}^{i=\frac{(N_t-1)}{2}} \rho_{0,4n+m-i}^0 \hat{f}_{0,n_p}^0(i) + \sum_{i=-\frac{(N_t-3)}{2}}^{i=\frac{(N_t-3)}{2}} \rho_{1,4n+m-i}^0 \hat{f}_{1,n_p}^0(i) \right.$$

$$\left. + \sum_{i=-\frac{(N_t-1)}{2}}^{i=\frac{(N_t-1)}{2}} \rho_{0,4n+m-i}^1 \hat{f}_{0,n_p}^{1,\Delta\tau}(i) + \sum_{i=-\frac{(N_t-3)}{2}}^{i=\frac{(N_t-3)}{2}} \rho_{1,4n+m-i}^1 \hat{f}_{1,n_p}^{1,\Delta\tau}(i) \right)$$

$$B_{m,n}^{(\Delta\tau)} = y_{\Delta\tau}(4n+m)$$

$$- \left( \sum_{i=-\frac{(N_t-1)}{2}}^{i=\frac{(N_t-1)}{2}} \rho_{0,4n+m-i}^0 \hat{f}_{0,n_p}^{0,\,\Delta\tau}(i) + \sum_{i=-\frac{(N_t-3)}{2}}^{i=\frac{(N_t-3)}{2}} \rho_{1,4n+m-i}^0 \hat{f}_{1,n_p}^{0,\Delta\tau}(i) \right.$$

$$\left. + \sum_{i=-\frac{(N_t-1)}{2}}^{i=\frac{(N_t-1)}{2}} \rho_{0,4n+m-i}^1 \hat{f}_{0,n_p}^{1}(i) + \sum_{i=-\frac{(N_t-3)}{2}}^{i=\frac{(N_t-3)}{2}} \rho_{1,4n+m-i}^1 \hat{f}_{1,n_p}^{1}(i) \right)$$

8. Verfahren nach einem der Ansprüche 1 bis 3, wobei, in Gegenwart von Mehrfachwegen, das Verfahren einen Schritt der Entzerrung umfasst, wobei der Viterbi-Algorithmus das entzerrte Signal verwendet, wobei die Metrik für jeden Viterbi-Knoten definiert ist durch

$$\lambda(n) = \begin{cases} \beta_n(2x_n - (D-C)\zeta\beta_{n+3} - C\zeta\beta_{n+1} - D\zeta\beta_{n-3}) - A\chi|\beta_n|^2 & \text{wenn } n = 4k \\ \beta_n(2x_n - (D-C)\zeta\beta_{n+1} - C\zeta\beta_{n-1} - D\zeta\beta_{n+3}) - A\chi|\beta_n|^2 & \text{wenn } n = 4k \\ \beta_n(2x_n - (D-C)\zeta\beta_{n-1} - D\zeta\beta_{n+1} - C\zeta\beta_{n-3}) - A\chi|\beta_n|^2 & \text{wenn } n = 4k \\ \beta_n(2x_n \qquad\qquad - D\zeta\beta_{n-1} - C\zeta\beta_{n+3}) - A\chi|\beta_n|^2 & \text{wenn } n = 4k \end{cases}$$

mit

$$\chi = |h_0|^2 + |h_1|^2$$

$$\zeta = Im(h_0^* h_1)$$

$$A = \frac{1}{2}\left(\widetilde{w}_0(0) + \widetilde{w}_0(\Delta\varepsilon T)\right)$$

$$C = \frac{1}{2}\left(\widetilde{w}_0(-T) + \widetilde{w}_0(-T + \Delta\varepsilon T)\right)$$

$$D = \frac{1}{2}\left(\widetilde{w}_0(T) + \widetilde{w}_0(T + \Delta\varepsilon T)\right)$$

wobei $\widetilde{w}_0$ und $\widetilde{w}_1$ gefilterte Versionen eines Hauptimpulses $w_0$ und eines Sekundärimpulses $w_1$ sind.

9.  Verfahren nach einem der vorhergehenden Ansprüche, wobei die Pseudosymbole $\rho_{0,i}^{0}$, $\rho_{1,i}^{0}$, die den Informationsbits entsprechen, die auf den Antennen A1, A2 emittiert werden, als Ausdruck haben

$$\rho_{0,i}^{p} = \begin{cases} \left(2b_i^{(p)} - 1\right) & \text{wenn i gerade ist} \\ j\left(2b_i^{(p)} - 1\right) & \text{wenn i ungerade ist} \end{cases}$$

$$\rho_{1,i}^{p} = \begin{cases} -j\left(2b_{i-2}^{(p)} - 1\right)\left(2b_{i-1}^{(p)} - 1\right)\left(2b_i^{(p)} - 1\right) & \text{wenn i gerade ist} \\ -\left(2b_{i-2}^{(p)} - 1\right)\left(2b_{i-1}^{(p)} - 1\right)\left(2b_i^{(p)} - 1\right) & \text{wenn i ungerade ist} \end{cases}$$

10. Verfahren nach einem der vorhergehenden Ansprüche, einen Schritt des Decodierens der LLRs mittels eines Kanaldecoders oder des Erhaltens der höchstwertigen Bits der LLRs umfassend.

11. Empfangsvorrichtung, die eine Verarbeitungseinheit umfasst, konfiguriert, um ein Verfahren nach einem der vorhergehenden Ansprüche durchzuführen.

12. Computerprogrammprodukt, das Codeanweisungen zur Ausführung eines Verfahrens nach einem der Ansprüche 1 bis 10 umfasst, wenn dieses von einem Prozessor ausgeführt wird.

**Claims**

1.  Method for receiving a CPM signal, Continuous Phase Modulation signal, with space-time coding, said signal being a SOQPSK-TG signal, Shaped Offset Quadrature Phase Shift Keying - Telemetry Group based on the IRIG-106 recommendation transmitted from two transmitting antennas noted A1, A2 the received signal modulating a plurality of bits $b_i^{(j)}$ j=0 or 1 and corresponds to the bits transmitted on antenna A1 and A2 respectively, said received signal comprising a time offset $\Delta\tau$ taking into account the time offset between the signals transmitted from each antenna A1, A2, said signal being received on one or more receiving antennas A3; the method comprises the following steps :

    - obtaining over an antenna a sampled digital signal y(k) and its offset version $y_{\Delta\tau}$ (k) taking into account the time offset between the two transmitting antennas, each comprising the contributions of the signals output from the two transmitting antennas, said digital signals being expressed according to the following decomposition:

$$s_p(t) \approx \sum_i \rho^p_{0,2i} w_0(t - 2iT_b) - \rho^p_{1,2i+1} w_1(t - 2iT_b - T_b)$$

$$+ \left( \sum_i \rho^p_{0,2i+1} w_0(t - 2iT_b - T_b) - \rho^p_{1,2i} w_1(t - 2iT_b) \right)$$

where :
- $T_b$ is the duration of one bit ;

$$p \in \{0,1\}$$

- $\rho^0_{0,i}, \rho^0_{1,i}$ are pseudo-symbols corresponding to the information bits $b_i^{(0)}$ transmitted over the antenna A1,

$\rho^1_{0,i}, \rho^1_{1,i}$ are pseudo-symbols corresponding to the information bits $b_i^{(1)}$ transmitted over the antenna A2;
- $w_0(t)$ et $w_1(t)$ are shaping pulses, respectively a main pulse and a secondary pulse
- defining a Viterbi algorithm (Treillis 1, Treillis 2) having a lattice with a fixed number of states and metrics also depending on at least said main impulse;
- obtaining, by means of said Viterbi algorithm, LLRs, Log Likelihood Ratio, on the transmitted information bits.

2. A method of receiving according to claim 1, wherein the digital signals obtained are expressed

$$y(k) \approx \sum_{m=0}^{1} \sum_{i=-\frac{N_t^m-1}{2}}^{\frac{N_t^m-1}{2}} \rho^0_{m,k-i} \tilde{f}^0_m(i) + \sum_{m=0}^{1} \sum_{i=-\frac{N_t^m-1}{2}}^{\frac{N_t^m-1}{2}} \rho^1_{m,k-i} \tilde{f}^{1,\Delta\tau}_m(i) + z(kT + \Delta\tau_0)$$

$$y_{\Delta\tau}(k) \approx \sum_{m=0}^{1} \sum_{i=-\frac{N_t^m-1}{2}}^{\frac{N_t^m-1}{2}} \rho^0_{m,k-i} \tilde{f}^{0,\Delta\tau}_m(i) + \sum_{m=0}^{1} \sum_{i=-\frac{N_t^m-1}{2}}^{\frac{N_t^m-1}{2}} \rho^1_{m,k-i} \tilde{f}^1_m(i) + z(kT + \Delta\tau_1)$$

where :

- $\Delta\tau = \Delta\tau_1 - \Delta\tau_0$ where $\Delta\tau_0$ is the delay of the direct path from antenna A1 and $\Delta\tau_1$ is the delay of the direct path from antenna A2, $\Delta\tau$ is the time offset;

$\Delta\varepsilon$ is the nearest integer of the division of $\Delta\tau$ by $T$;

- $\rho^0_{0,i}, \rho^0_{1,i}$ are pseudo-symbols corresponding to the information bits transmitted over the antenna A1, $\rho^1_{0,i}, \rho^1_{1,i}$ are pseudo-symbols corresponding to the information bits transmitted on the antenna A2;
- $\delta(t)$ is the Dirac pulse centred on the antenna $\delta(t)$ is the Dirac pulse centred at 0;
- $N_t^m$ is the filter length of the filters $\tilde{f}^0_m, \tilde{f}^{0,\Delta\tau}_m, \tilde{f}^1_m, \tilde{f}^{1,\Delta\tau}_m$ ;
- z is additive noise.

3. The method of claim 2, wherein the values $\tilde{f}^0_m, \tilde{f}^{0,\Delta\tau}_m, \tilde{f}^1_m, \tilde{f}^{1,\Delta\tau}_m$ are defined as follows:

$$\tilde{f}^p_m(i) = \tilde{f}^p_m(t = iT)$$

$$\tilde{f}^{0,\Delta\tau}_m(i) = \tilde{f}^0_m(t = iT + \Delta\varepsilon T)$$

$$\tilde{f}_m^{1,\Delta\tau}(i) = \tilde{f}_m^0(t = iT - \Delta\varepsilon T)$$

with

$$\tilde{f}_m^p(t) = \int f_m^k(\theta)g(\theta - t)d\theta$$

and

$$f_m^0(t) = w_m(t) * \left( h_0\delta(t) + \sum_{i=1}^{N_0} h_{2i}\delta(t - (\Delta\tau_{2i} - \Delta\tau_0)) \right), m \in \{0,1\}$$

$$f_m^1(t) = w_m(t) * \left( h_1\delta(t) + \sum_{i=1}^{N_1} h_{2i+1}\delta(t - (\Delta\tau_{2i+1} - \Delta\tau_1)) \right), m \in \{0,1\}$$

where $N_0$, $N_1$ are the number of multipaths from the antenna A1 and A2 respectively.

4. Method according to one of the preceding claims, comprising prior to the step of obtaining the signals y(k) and its offset version $y_{\Delta\tau}$ (k) a step of filtering (E51) the received signal by means of a low-pass filter with finite impulse response FIR, Finite Impulse Response, of the Equiripple type constructed digitally in such a way that the normalized cut-off frequency is 0.45.

5. A method according to any of the preceding claims, wherein in the absence of multipath, the digital signals obtained are grouped by groups of 4 samples, and have are expressed

$$y(4k) = h_0 \sum_{i=-1}^{1} \rho_{0,4k-i}^0 \widetilde{w}_0(iT) + h_0\rho_{1,4k}^0 \widetilde{w}_1(0) + h_1 \sum_{i=-1}^{1} \rho_{0,4k-i}^1 \widetilde{w}_0(iT - \Delta\varepsilon T)$$
$$+ h_1\rho_{1,4k}^1 \widetilde{w}_1(-\Delta\varepsilon T) + \tilde{n}(4kT)$$

$$y_{\Delta\tau}(4k) = h_0 \sum_{i=-1}^{1} \rho_{0,4k-i}^0 \widetilde{w}_0(iT + \Delta\varepsilon T) + h_0\rho_{1,4k}^0 \widetilde{w}_1(\Delta\varepsilon T) + h_1 \sum_{i=-1}^{1} \rho_{0,4k-i}^1 \widetilde{w}_0(iT)$$
$$+ h_1\rho_{1,4k}^1 \widetilde{w}_1(0) + \tilde{n}(4kT + \Delta\varepsilon T)$$

where $\widetilde{w}_0$ et $\widetilde{w}_1$ are filtered versions of a main pulse $w_0$ and a secondary pulse $w_1$.

6. A method according to the preceding claim, wherein the metrics of the Viterbi algorithm are defined by

$$\lambda(S_{n-1}(i) \to S_n(j)) = \sum_{m=-1}^{2} \left[ \left| B_{m,n}^{(0)} \right|^2 + \left| B_{m,n}^{(\Delta\tau)} \right|^2 \right]$$

with

$$B_{m,n}^{(0)} = y(4n+m) - h_0 \left( \sum_{i=-1}^{1} \rho_{0,4n+m-i}^0 \widetilde{w}_0(iT) + \rho_{1,4n+m}^0 \ \widetilde{w}_1(0) \right)$$

$$- h_1 \left( \sum_{i=-1}^{1} \rho_{0,4n+m-i}^1 \widetilde{w}_0(iT - \Delta\varepsilon T) + \rho_{1,4n+m}^1 \ \widetilde{w}_1(-\Delta\varepsilon T) \right)$$

$$B_{m,n}^{(\Delta\tau)} = y_{\Delta\tau}(4n+m) - h_0 \left( \sum_{i=-1}^{1} \rho_{0,4n+m-i}^0 \widetilde{w}_0(iT + \Delta\varepsilon T) + \rho_{1,4n+m}^0 \ \widetilde{w}_1(\Delta\varepsilon T) \right)$$

$$- h_1 \left( \sum_{i=-1}^{1} \rho_{0,4n+m-i}^1 \widetilde{w}_0(iT) + \rho_{1,4n+m}^1 \ \widetilde{w}_1(0) \right)$$

where $\widetilde{w}_0$ et $\widetilde{w}_1$ are filtered versions of a main pulse $w_0$ and a secondary pulse $w_1$.

7. A method according to any of claims 1 to 3, wherein in the presence of multipath, the method comprises a step (E54') of estimating the propagation channel so as to obtain the estimates of $\tilde{f}_m^0, \tilde{f}_m^{0,\Delta\tau}, \tilde{f}_m^1, \tilde{f}_m^{1,\Delta\tau}$ the Viterbi algorithm using the estimated channel parameters, the metrics of the Viterbi algorithm being defined by

$$\lambda(S_{n-1}(i) \to S_n(j)) = \sum_{m=-1}^{2} \left[ \left| B_{m,n}^{(0)} \right|^2 + \left| B_{m,n}^{(\Delta\tau)} \right|^2 \right]$$

with

$$B_{m,n}^{(0)} = y(4n+m)$$

$$- \left( \sum_{i=-\frac{(N_t-1)}{2}}^{i=\frac{(N_t-1)}{2}} \rho_{0,4n+m-i}^0 \hat{f}_{0,n_p}^0(i) + \sum_{i=-\frac{(N_t-3)}{2}}^{i=\frac{(N_t-3)}{2}} \rho_{1,4n+m-i}^0 \hat{f}_{1,n_p}^0(i) \right.$$

$$\left. + \sum_{i=-\frac{(N_t-1)}{2}}^{i=\frac{(N_t-1)}{2}} \rho_{0,4n+m-i}^1 \hat{f}_{0,n_p}^{1,\Delta\tau}(i) + \sum_{i=-\frac{(N_t-3)}{2}}^{i=\frac{(N_t-3)}{2}} \rho_{1,4n+m-i}^1 \hat{f}_{1,n_p}^{1,\Delta\tau}(i) \right)$$

$$B_{m,n}^{(\Delta\tau)} = y_{\Delta\tau}(4n + m)$$

$$- \left( \sum_{i=-\frac{(N_t-1)}{2}}^{i=\frac{(N_t-1)}{2}} \rho_{0,4n+m-i}^0 \hat{f}_{0,n_p}^{0,\ \Delta\tau}(i) + \sum_{i=-\frac{(N_t-3)}{2}}^{i=\frac{(N_t-3)}{2}} \rho_{1,4n+m-i}^0 \hat{f}_{1,n_p}^{0,\Delta\tau}(i) \right.$$

$$\left. + \sum_{i=-\frac{(N_t-1)}{2}}^{i=\frac{(N_t-1)}{2}} \rho_{0,4n+m-i}^1 \hat{f}_{0,n_p}^1(i) + \sum_{i=-\frac{(N_t-3)}{2}}^{i=\frac{(N_t-3)}{2}} \rho_{1,4n+m-i}^1 \hat{f}_{1,n_p}^1(i) \right)$$

8. A method according to any of claims 1 to 3, wherein in the presence of multipath the method comprises an equalisation step, the Viterbi algorithm using the equalised signal, the metric for each node of the Viterbi being defined by

$$\lambda(n) = \begin{cases} \beta_n(2x_n - (D - C)\zeta\beta_{n+3} - C\zeta\beta_{n+1} - D\zeta\beta_{n-3}) - A\chi|\beta_n|^2 & \text{si } n = 4k \\ \beta_n(2x_n - (D - C)\zeta\beta_{n+1} - C\zeta\beta_{n-1} - D\zeta\beta_{n+3}) - A\chi|\beta_n|^2 & \text{si } n = 4k + 1 \\ \beta_n(2x_n - (D - C)\zeta\beta_{n-1} - D\zeta\beta_{n+1} - C\zeta\beta_{n-3}) - A\chi|\beta_n|^2 & \text{si } n = 4k + 2 \\ \beta_n(2x_n \qquad\qquad - D\zeta\beta_{n-1} - C\zeta\beta_{n+3}) - A\chi|\beta_n|^2 & \text{si } n = 4k + 3 \end{cases}$$

with

$$\chi = |h_0|^2 + |h_1|^2$$

$$\zeta = Im(h_0^* h_1)$$

$$A = \frac{1}{2}(\widetilde{w}_0(0) + \widetilde{w}_0(\Delta\varepsilon T))$$

$$C = \frac{1}{2}(\widetilde{w}_0(-T) + \widetilde{w}_0(-T + \Delta\varepsilon T))$$

$$D = \frac{1}{2}(\widetilde{w}_0(T) + \widetilde{w}_0(T + \Delta\varepsilon T))$$

where $\widetilde{w}_0$ et $\widetilde{w}_1$ are filtered versions of a main pulse $w_0$ and a secondary pulse $w_1$.

9. A method according to any of the preceding claims, wherein the pseudo-symbols $\rho_{0,i}^0, \rho_{1,i}^0$ corresponding to the information bits transmitted on the antennas A1, A2, are expressed

$$\rho_{0,i}^p = \begin{cases} \left(2b_i^{(p)} - 1\right) & \text{si } i \text{ est pair} \\ j\left(2b_i^{(p)} - 1\right) & \text{si } i \text{ est impair} \end{cases}$$

$$\rho_{1,i}^{p} = \begin{cases} -j\left(2b_{i-2}^{(p)} - 1\right)\left(2b_{i-1}^{(p)} - 1\right)\left(2b_{i}^{(p)} - 1\right) & \text{si } i \text{ est pair} \\ -\left(2b_{i-2}^{(p)} - 1\right)\left(2b_{i-1}^{(p)} - 1\right)\left(2b_{i}^{(p)} - 1\right) & \text{si } i \text{ est impair} \end{cases}$$

10. A method according to any of the preceding claims, comprising a step of decoding the LLRs by means of a channel decoder or obtaining the most significant bits of the LLRs.

11. A receiving device comprising a processing unit configured to implement a method according to any of the preceding claims.

12. A computer program product comprising code instructions for executing a method according to any of claims 1 to 10, when executed by a processor.

[Fig. 1]

[Fig. 2]

EP 3 912 317 B1

[Fig. 3]

[Fig. 4]

[Fig. 5]

[Fig. 6]

[Fig. 7]

[Fig. 8]

[Fig. 9]

$\sigma_n$     précodeur récursif     $\gamma_n$     Modulateur CPM avec $h = 1/2$

$\sigma_n \in \{+1, -1\}$     $\gamma_n = (-1)^{n+1} \sigma_n \, \sigma_{n-1}$

[Fig. 10]

[Fig. 11]

[Fig. 12]

[Fig. 13]

[Fig. 14]

[Fig. 15]

[Fig. 16]

[Fig. 17]

[Fig. 18]

[Fig. 19]

$$y(k) = \sum_i \rho_{0,k-i}^0 f_0^0(i) \longrightarrow \boxed{\text{Estimateur de canal}} \longrightarrow \hat{f}_0^0$$

[Fig. 20]

$$y(k) = \sum_i \sum_{m=0}^1 \rho_{m,k-i}^0 f_m^0(i) + \rho_{m,k-i}^1 f_m^{1,\Delta\tau}(i)$$

$$y_{\Delta\tau}(k) = \sum_i \sum_{m=0}^1 \rho_{m,k-i}^0 f_m^{0,\Delta\tau}(i) + \rho_{m,k-i}^1 f_m^1(i)$$

Estimateur de canal

$$\{\hat{f}_m^0\}_{m\in\{0,1\}}$$

$$\{\hat{f}_m^{1,\Delta\tau}\}_{m\in\{0,1\}}$$

$$\{\hat{f}_m^{0,\Delta\tau}\}_{m\in\{0,1\}}$$

$$\{\hat{f}_m^1\}_{m\in\{0,1\}}$$

[Fig. 21]

[Fig. 22]

[Fig. 23]

[Fig. 24]

$$S'_N = [\tilde{b}_{N-3}, \dots, \tilde{b}_{N+2}]$$

$$S'_{N+1} = [\tilde{b}_{N-2}, \dots, \tilde{b}_{N+3}]$$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **N. T. NELSON.** Space-time coding with offset modulations. Brigham Young University - Provo, 2007
- **M. RICE ; T. NELSON ; J. PALMER ; C. LAVIN ; K. TEMPLE.** Space-Time Coding for Aeronautical Telemetry: Part II-Decoder and System Performance. *IEEE Transactions on Aerospace and Electronic Systems,* Août 2017, vol. 53 (4), 1732-1754
- **M. RICE ; J. PALMER ; C. LAVIN ; T. NELSON.** Space-Time Coding for Aeronautical Telemetry : Part I-Estimators. *IEEE Transactions on Aerospace and Electronic Systems,* Août 2017, vol. 53 (4), 1709-1731

- **R. OTHMAN ; A. SKRZYPCZAK ; Y. LOUËT.** PAM Décomposition of Ternary CPM with Duobinary Encoding. *IEEE Transactions on Communications,* Octobre 2017, vol. 65 (10), 4274-4284
- A Viterbi Algorithm with Soft-Decision Outputs and its Application. **J. HAGENAUER ; P. HOEHER.** Global Télécommunications Conférence and Exhibition. IEEE GLOBECOM, 03 Novembre 1989, 1680-1686
- **GEOGHEGAN ; MARK.** Optimal Linear Detection of SOQPSK,. *International Telemetering Conférence Proceedings,* Octobre 2002
- **G. K. KALEH.** Simple cohérent receivers for partial response continuous phase modulation. *IEEE Journal on Selected Areas in Communications,* Décembre 1989, vol. 7 (9), 1427-1436